(19) **Europäisches Patentamt European Patent Office Office européen des brevets**

(11) **EP 4 660 882 A1**

(12) **EUROPEAN PATENT APPLICATION**

(43) Date of publication:
10.12.2025  Bulletin 2025/50

(21) Application number: 25173367.1

(22) Date of filing: 29.04.2025

(51) International Patent Classification (IPC):
*G06N 3/048* (2023.01)      *G06N 3/063* (2023.01)
*G06N 3/084* (2023.01)      *G06N 3/0464* (2023.01)
*G06N 3/09* (2023.01)       *G06N 3/0495* (2023.01)
*G06N 3/0455* (2023.01)

(52) Cooperative Patent Classification (CPC):
**G06N 3/048; G06N 3/063;** G06N 3/0455;
G06N 3/0464; G06N 3/0495; G06N 3/084;
G06N 3/09

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  05.06.2024  US 202418734487

(71) Applicant: **Intel Corporation
Santa Clara, CA 95054 (US)**

(72) Inventors:
• **PRIYA, Jainaveen Sundaram
Hillsboro, OR, 97123 (US)**
• **BUDHKAR, Prerna
Hillsboro, OR, 97123 (US)**
• **CHUA, Vui Seng
Hillsboro, OR, 97124 (US)**
• **SRINIVASA, Srivatsa Rangachar
Hillsboro, OR, 97124 (US)**
• **KARNIK, Tanay
Portland, OR, 97229 (US)**

(74) Representative: **Maiwald GmbH
Engineering
Elisenhof
Elisenstrasse 3
80335 München (DE)**

(54) **EFFICIENT SOFTMAX COMPUTATION WITH NO LOSS IN ACCURACY**

(57)    A modified 2-pass version of the SoftMax operation can be implemented to address reduce computational cost without loss of accuracy, in particular for deep learning neural networks such as transformer-based neural networks and large language models (LLMs). The first pass is modified to include two scalar operations at the end. At the end of the first pass, a first scalar operation is performed to calculate a logarithm of the denominator, and a second scalar operation is performed to calculate an operand value based on a sum of the logarithm of the denominator and the maximum value. The second pass is modified to perform addition and exponentiation. In the second pass, an element of an input tensor is subtracted by the operand value to obtain an exponent, and a base is raised to the exponent. The second pass avoids divisions.

802

INITIALIZE:
$m \leftarrow -inf$
$d \leftarrow 0$

804

PASS 1: CALCULATE RUNNING MAX, UPDATE DENOMINATOR, DETERMINE c=max+ln(d)
for j in range(1,N):
    if $(x_j > m): d = d \cdot e^{m - x_j}, m = x_j$
        $d \leftarrow d + e^{x_j - m}$
$d \leftarrow \ln(d)$
$c = d + m$

P operations
+scalar Ln operation
+scalar addition

806

PASS 2: CALCULATE SOFTMAX
for j in range(1,N):
    $x_j \leftarrow e^{x_j - c}$

N subtractions
N exponentials
~~N divisions~~

**FIG. 8**

EP 4 660 882 A1

**Description**

Background

Deep neural networks (DNNs) are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as there can be a large number of operations as well as a large amount of data to read and write.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates a block in a transformer-based neural network, according to some embodiments of the disclosure.
FIG. 2 illustrates operations in an attention layer, according to some embodiments of the disclosure.
FIG. 3 illustrates a DNN system, according to some embodiments of the disclosure.
FIG. 4 illustrates a DNN module, according to some embodiments of the disclosure.
FIG. 5 illustrates a processing engine, according to some embodiments of the disclosure.
FIG. 6 illustrates an exemplary naïve 3-pass version of operations to perform SoftMax on an input tensor, according to some embodiments of the disclosure.
FIG. 7 illustrates an exemplary 2-pass version of operations to perform SoftMax on an input tensor, according to some embodiments of the disclosure.
FIG. 8 illustrates an exemplary modified 2-pass version of operations to perform SoftMax on an input tensor, according to some embodiments of the disclosure.
FIG. 9 illustrates an exemplary modified 2-pass version of operations with approximation to perform SoftMax on an input tensor and matrix multiplication of an output tensor and a matrix, according to some embodiments of the disclosure.
FIG. 10 is a flowchart showing a method for compiling a SoftMax operation to be performed by a processor, according to some embodiments of the disclosure.
FIG. 11 is a flowchart showing a method for executing a SoftMax operation to be performed by a processor, according to some embodiments of the disclosure.
FIG. 12 is a block diagram of an exemplary computing device, according to some embodiments of the disclosure.

Detailed Description

*Overview*

The last decade has witnessed a rapid rise in artificial intelligence (AI) based data processing, particularly based on DNNs. DNNs are widely used in the domains of computer vision, speech recognition, image, and video processing mainly due to their ability to achieve beyond human-level accuracy. A DNN typically includes a sequence of layers. A DNN layer may include one or more deep learning operations (also referred to as "neural network operations"), such as convolution operation, matrix multiplication operation, layer normalization operation, batch normalization operation, SoftMax operation, pooling operation, elementwise operation, linear operation, nonlinear operation, and so on. While DNNs are effective at analyzing and predicting, they come at a cost of immense computational power. DNNs can consume significant power and runtime during training and during inference.

Transformer-based neural networks or transformer-based models are a type of DNN that can be used to power large language models (LLMs) and computer vision models (referred to in literature as ViTs). Transformer-based neural networks are used in services and applications such as natural language processing, speech processing, conversational AI assistants, image captioning, object detection, video understanding, recommendation systems, bioinformatics, time-series forecasting, reinforcement learning, and generative models to produce text, image, or music. Unlike other types of DNNs, such as convolutional neural networks (CNNs), where the SoftMax operation is only used in the output layer, transformer-based neural networks include the SoftMax operation in every layer. The SoftMax operation can be a bottleneck when executing a transformer-based neural network on a processor, especially when sequence lengths become longer and models become larger. Within the computation pipeline of a transformer-based neural network, the SoftMax operation can consume a significant amount of runtime (second to matrix multiplication or MatMul). In some pipelines, the SoftMax operation can consume 20%-40% of the overall runtime on a processor. Ability to improve the efficiency of the SoftMax operation carried out on a processor can significantly improve the overall runtime of the transformer-based neural network.

Input or output data of deep learning operations may be arranged in data structures called tensors. In the case of a SoftMax operation, the SoftMax operation may operate on an input tensor and output an output tensor. In the case of a matrix multiplication (MatMul) operation, the MatMul operation may operate on a first input tensor and a second input tensor and output an output tensor that represents the product of the first input tensor and the second input tensor multiplied together. A tensor is a data structure having multiple elements across one or more dimensions. Examples of tensors include vector (which is one-dimensional (1D) tensor), matrix (which is two-dimensional (2D) tensor), three-dimensional (3D) tensors, four-dimensional (4D) tensors, and even higher dimensional tensors. A dimension of a tensor may correspond to an axis, e.g., an axis in a coordinate system. A dimension may be measured by the number of data points along the axis. The dimensions of a tensor may define the shape of the tensor. A DNN layer may receive one or more input tensors and compute an output tensor from the one or more input tensors. Tensors in DNNs can be saved in X-major (e.g., XYZ or XZY format), Y-major formats (e.g., YXZ or YZX format), or Z-major formats (e.g., ZXY or ZYX format). The format of a tensor may define the order in which the data points in the tensor are stored, written, or read. The first character may represent the dimension in which data points are contiguous in memory. The second character may represent the dimension in which data points can be accessed after the contiguous data points are accessed in memory. The third character may represent the dimension in which data points are accessed after the data points in the dimension represented by the second character are exhausted. Taking the ZXY format for example, the access order first starts in the Z dimension, then moves to the X dimension, and finally moves to the Y dimension. Data points in the tensor are contiguous in memory in the Z dimension, meaning data points having the same (x, y) coordinates are contiguous in memory. Using tensor permutation, the tensor may be read from memory in a different format.

The SoftMax operation can take an input tensor having N elements $x_i$ (along a specified dimension) and applies the SoftMax operation on the elements $x_i$ to produce an output tensor having elements $y_i$. The SoftMax operation can convert the elements $x_i$ into probabilities $y_i$ of a probability distribution, where the values or probabilities are non-negative and sum to 1. The values may be within a range from 0 to 1. The mathematical representation of the SoftMax operation is as follows:

$$y_i = \frac{e^{x_i - \max(x_i)}}{\sum_{j=1}^{N} e^{x_i - \max(x_i)}} \quad \textbf{(eq. 1)}$$

Where max $(x_i)$ denotes the maximum value of the elements $x_i$. Subtracting by max $(x_i)$ can ensure numerical stability.

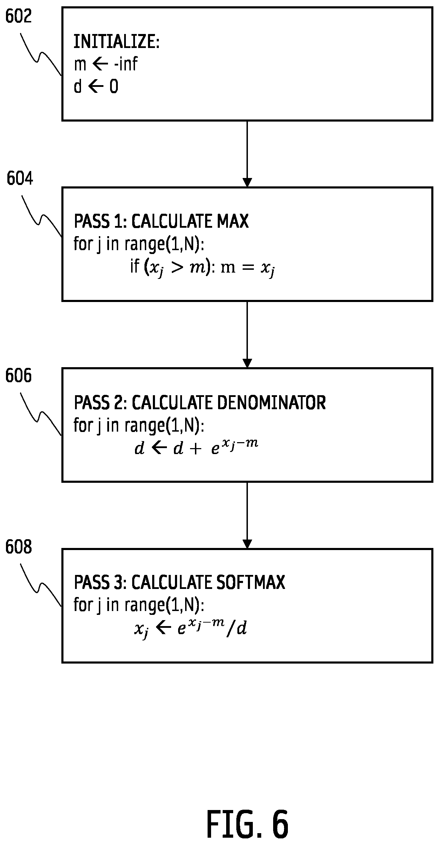

In some implementations, a naïve 3-pass version of the SoftMax operation may be executed on a processor. The naïve 3-pass version is illustrated and described in FIG. 6. In a first pass, the maximum value of the elements $x_i$ is determined. In a second pass, the denominator value is calculated. In a third pass, a numerator is divided by the denominator value.

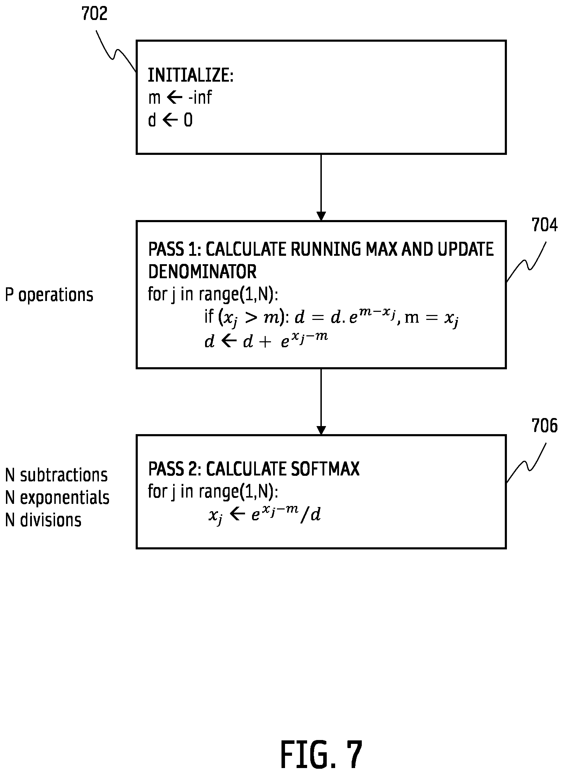

In some implementations, a 2-pass version of the SoftMax operation may be executed on a processor. The 2-pass version is illustrated and described in FIG. 7. In a first pass, the maximum value and the denominator value are determined. In a second pass, a numerator is divided by the denominator. While the 2-pass version cuts the number of passes on the data, the second pass involves N number of divisions, which can take a number of cycles (e.g., 2 cycles) to complete. In other words, the second pass may have a high computation cost associated with the N number of divisions.

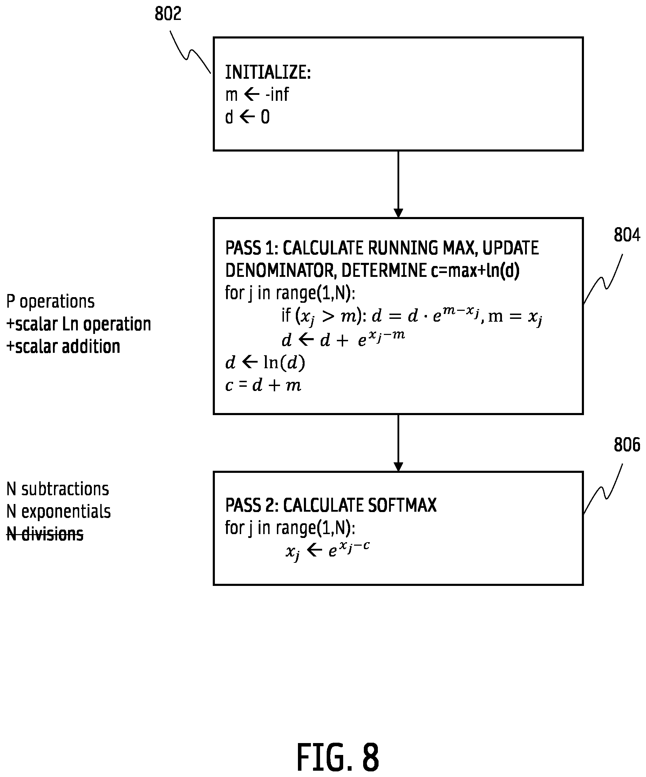

Embodiments of the present disclosure may address at least some of the challenges and issues described above by modifying the 2-pass version of the SoftMax operation. The modified 2-pass version and a modified 2-pass version with approximation are illustrated and described in FIGS. 8-9. The first pass is modified to include two scalar operations at the end. At the end of the first pass, a first scalar operation is performed to calculate a logarithm of the denominator, and a second scalar operation is performed to calculate an operand value based on a sum of the logarithm of the denominator and the maximum value. The second pass is modified to perform addition and exponentiation. In the second pass, an element of the input tensor is subtracted by the operand value to obtain an exponent, and a base is raised to the exponent. The second pass omits divisions.

Notably, inverse multiplications or divisions are eliminated in the second pass. The calculations in the modified 2-pass version are mathematically equivalent to equation 1, which means that there is no loss in model accuracy due to the modifications made, and there is no need for specific fine-tuning to compensate for the loss in accuracy otherwise incurred from approximation-based techniques. The modified 2-pass version can be extended to utilize approximation. In addition, the modified 2-pass version and the modified 2-pass version with approximation can be compatible with various data formats.

*Transformer-based neural networks or transformer-based models*

A transformer-based neural network may include one or more blocks. A block may be an encoder. A block may be a decoder. There can be many encoder blocks and decoder blocks in the transformer-based neural network.

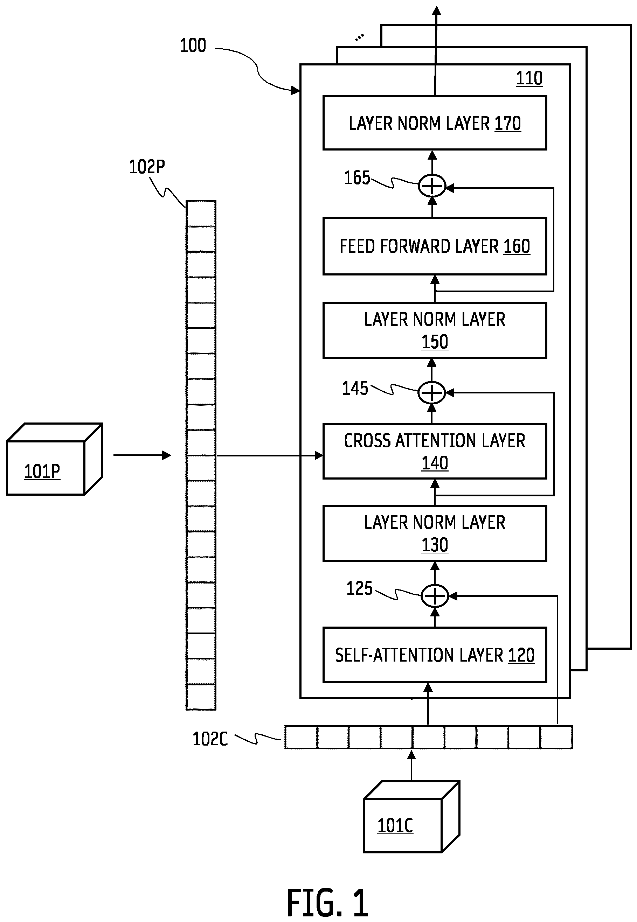

FIG. 1 illustrates block 100 in a transformer-based neural network, according to some embodiments of the disclosure. For illustration, block 100 is a decoder block in a transformer-based neural network. The transformer block 100 includes transformer decoders 110, individually referred to as "transformer decoder 110." As an example, each transformer decoder 110 can include a plurality of layers, such as self-attention layer 120, layer norm layer 130, cross attention layer 140, another layer norm layer 150, feed forward layer 160, and another layer norm layer 170. In other embodiments, a transformer decoder 110 may include different, fewer, or more layers. The transformer block 100 may include a different number of transformer decoders 110.

Self-attention layer 120 or cross attention layer 140 may have an attention function. In some embodiments, an attention function may map one or more queries and one or more key-value pairs to an output, where the query, each key, each value, or the output may be a tensor, such as a vector. The output may be computed as a weighted sum of the values. The weight assigned to each value may be computed by a compatibility function of the query with the corresponding key. Layer norm layer 130 may connect all positions with a constant number of sequentially executed operations. Self-attention, sometimes called intra-attention, may be an attention mechanism relating different positions of a single sequence in order to compute a representation of the sequence. Self-attention layer 120 may allow each position in the corresponding transformer decoder 110 to attend to all positions in the transformer decoder 110 up to and including that position.

As shown in FIG. 1, self-attention layer 120 receives vector 102C. The vector 102C may be generated by flattening a current feature map 101C. In some embodiments, current feature map 101C may be a 2D or 3D tensor, while vector 102C may be a 1D tensor. The data points in current feature map 101C may be rearranged so that the data points are all in one dimension to generate vector 102C. In an example, current feature map 101C may have three dimensions: X, Y, and Z, in which the Z dimension may be the channel dimension. The data points of current feature map 101C may be rearranged to be all in one of the X, Y, and Z dimensions to form vector 102C. Vector 102C is input into the self-attention layer 120 and may be used as the query, keys, and values of the self-attention function. In some embodiments, the self-attention function in self-attention layer 120 may be denoted as:

$$f(Q, K, V) = \sigma\left(\frac{QK^T}{\sqrt{d_k}}\right)V \qquad \textbf{(eq. 2)}$$

where $Q, K, V$ denotes the query, keys, and values, respectively; $f(Q, K, V)$ denotes the self-attention function; and $\sigma$ denotes a SoftMax function or operation.

The output of self-attention layer 120 is further accumulated with vector 102C by concatenator 125. The result of the concatenation is input into layer norm layer 130. Layer norm layer 130 applies a layer normalization operation on the output of concatenator 125. Layer norm layer 130 may normalize its input (i.e., the output of concatenator 125) across the feature dimension (instead of the batch dimension). The feature dimension may be the dimension of vector 102C or vector 102P.

In some embodiments, the layer normalization operation may include a sequence of computations. Layer norm layer 130 may include a mean computation, which may be denoted as $\mu_{xy} = \frac{1}{Z} \times \sum_{z=1}^{Z} A_{xyz}$, where $A_{xyz}$ denotes a data element in the input tensor, $x$ may be the positional index of the data element in one of the spatial dimensions, $y$ may be the positional index of the data element in the other one of the spatial dimensions, $z$ may be the positional index of the data element in the channel dimension, and $\mu_{xy}$ denotes the output of the mean computation, which may be a 2D matrix. The mean computation may be channel-wise reduction operation. Layer norm layer 130 may convert $\mu_{xy}$ to a 3D tensor $\mu_{xyz}$, e.g., by replicating every data element over $z$ output points.

Layer norm layer 130 may also include an elementwise subtraction, which may be denoted as $D_{xyz} = A_{xyz} - \mu_{xyz}$. Layer norm layer 130 may also perform a variance computation, which may be denoted as $\sigma^2{}_{xy} = \sum_{z=1}^{Z} D^2{}_{xyz}$.

$$M_{xy} = \frac{1}{\sqrt{\frac{1}{Z} \times (\sigma^2{}_{xy} + \epsilon \times Z)}}$$

Layer norm layer 130 may further include a division computation denoted as $M_{xy}$ may be a 2D tensor. Layer norm layer 130 may also convert $M_{xy}$ to a 3D tensor $M_{xyz}$, e.g., by replicating every data element over $z$ output points. Further, layer norm layer 130 may have an element multiplication denoted as

$$A'_{xyz} = \frac{A_{xyz} - \mu_{xyz}}{\sqrt{\frac{1}{Z} \times (\sigma^2{}_{xy} + \epsilon)}} = \left(A_{xyz} - \mu_{xyz}\right) \times \frac{1}{\sqrt{\frac{1}{Z} \times (\sigma^2{}_{xy} + \epsilon)}} = D_{xyz} \times M_{xyz}$$

. Layer norm layer 130 may further

$$A''_{xyz} = A'_{xyz} + \frac{\beta_z}{\gamma_z}$$

compute and $LN_{xyz} = A''_{xyz} \times y_z$. $LN_{xyz}$ may be the output of the layer normalization operation.

The output of layer norm layer 130, which encodes the flattened current feature, may be input into cross attention layer 140. Cross attention layer 140 also receives vector 102P as another input. Vector 102P is generated by flattening previous feature maps such as previous feature map 101P. Previous feature map 101P may be generated by an encoder block of the transformer-based neural network. In some embodiments, a previous feature map 101P may be a 2D or 3D tensor, while vector 102P may be a 1D tensor. The data points in previous feature maps 101P may be rearranged so that the data points are all in one dimension to generate vector 102P. In an example, each previous feature map 101P may have three dimensions: X, Y, and Z, in which the Z dimension may be the channel dimension. The data points of previous feature maps 101P may be rearranged to be all in one of the X, Y, and Z dimensions to form vector 102P. The data points in the same previous feature map may be arranged together, e.g., in a manner that is not interrupted by any data points in a different previous feature map. In some embodiments, vector 102P is in the same dimension as vector 102C. Vector 102C and vector 102P are each represented by a sequence of boxes in FIG. 1 for the purpose of illustration. The number of boxes in vector 102C or vector 102P does not represent the number of data points in vector 102C or vector 102P. In some embodiments, the number of data points in the vector 102C may equal the number of data points in the current feature map 101C, and the number of data points in the vector 102P may equal the total number of data points in all the previous feature maps 101P.

Cross attention layer 140 has a cross attention function that is applied on vector 102P and vector 102C. Vector 102P may be used as the query, and vector 102C may be used as the keys and values. The cross attention function may be denoted as:

$$f_{CA}\left(s_t, s_p\right) = \sigma\left(\frac{(s_t W^Q)(s_p W^K)^T}{\sqrt{C}}\right)\left(s_p W^V\right) \qquad \textbf{(eq. 3)}$$

where $\sigma$ is the SoftMax function or operation; $s_t \in \mathbb{R}^{(HW) \times C}$ denotes the vector 102C; $s_p \in \mathbb{R}^{(N_F HW) \times C}$ denotes vector 102P; and $W^Q, W^K, W^V \in \mathbb{R}^{C \times C}$ are projection matrices for query, keys, and values respectively.

The output of cross attention layer 140 may be accumulated with the output of layer norm layer 130 by another concatenator 145. The output of concatenator 145 is input into layer norm layer 150 for performing another layer normalization operation in layer norm layer 150. The output of layer norm layer 150 is input into feed forward layer 160. In some embodiments, feed forward layer 160 may include a linear transformation and a nonlinear transformation. The linear transformation may be the same or similar to the operation in a fully connected layer. The nonlinear transformation may be an activation function. In some embodiments, feed forward layer 160 may multiply the input with keys to get a weight for each key. Feed forward layer 160 may compute a weight sum of the values using the weights to produce the output.

The output of feed forward layer 160 may be accumulated with the output of layer norm layer 150 by a concatenator 165. The output of the concatenator 165 may be input into layer norm layer 170 in which another layer normalization operation is performed. The output of layer norm layer 170 may be input into the next transformer decoder 110 for further processing. The output of the last transformer decoder 110 may constitute the output of the transformer block 100, which may be an intermediate feature map that represents an aggregation of the current feature map 101C and the previous feature maps 101P.

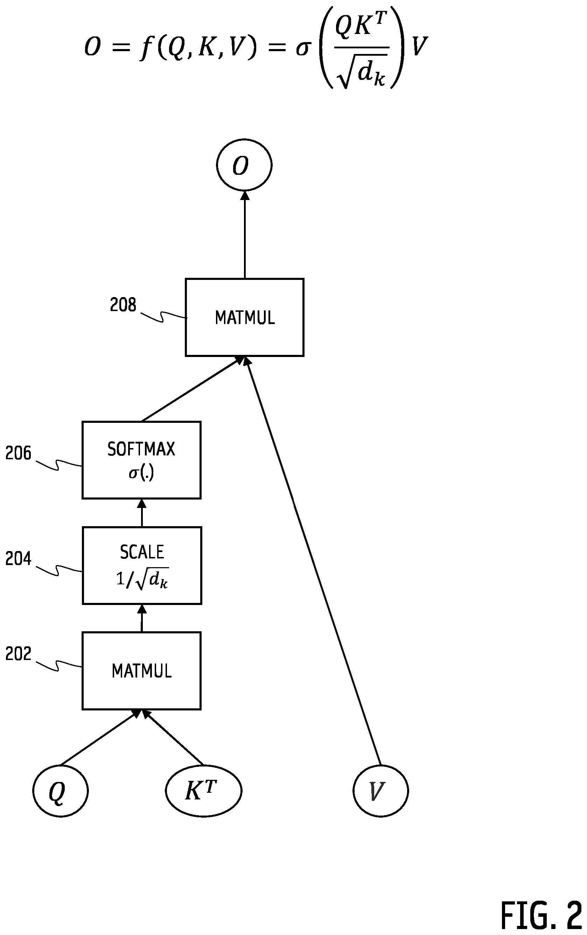

FIG. 2 illustrates operations in an attention layer, according to some embodiments of the disclosure. For a transformer-based neural network, the attention layer (e.g., a self-attention layer, a cross attention layer, a multi-head attention layer, a masked multi-head attention layer) can be included in an encoder block. The attention layer, e.g., self-attention layer 120 and cross attention layer 140 of FIG. 1, can be included in a decoder block.

To perform at least some of the operations associated with an attention mechanism, the attention layer would include operations such as MatMul, a scaling operation, and a SoftMax function or operation. To illustrate, operations for computing values based on equation 2 are depicted in FIG. 2.

The attention layer may include MatMul operation 202. MatMul operation 202 may multiply matrix $Q$ and matrix $K^T$ to calculate $QK^T$.

The attention layer may include scale operation 204. Scale operation 204 may scale values of $QK^T$ (output tensor of MatMul operation 202) by $1/\sqrt{d_k}$ to calculate $\frac{QK^T}{\sqrt{d_k}}$.

The attention layer may include SoftMax operation 206. SoftMax operation 206 may apply the SoftMax function on $\frac{QK^T}{\sqrt{d_k}}$ (output tensor of scale operation 204) to calculate $\sigma\left(\frac{QK^T}{\sqrt{d_k}}\right)$. SoftMax operation 206 may convert the output of scale operation 204 into a matrix of probabilities, or attention scores.

The attention layer may include MatMul operation 208. MatMul operation 208 may multiply matrix $\sigma\left(\frac{QK^T}{\sqrt{d_k}}\right)$ (output tensor of SoftMax operation 206) and matrix $V$ to calculate output $O = f(Q, K, V) = \sigma\left(\frac{QK^T}{\sqrt{d_k}}\right)V$. MatMul operation 208 combines the matrix of probabilities or attention scores with the value tensor $V$.

The output of MatMul operation 208 may be passed on to a next layer, such as a layer norm layer in a transformer block.

In practice, the attention layer may include many instances of the operations illustrated in FIG. 2 in parallel. For a self-attention layer, SoftMax operation 206 may be applied to calculate b x N times, where b is batch size, and N is sequence length. N may also be the size of the input tensor to SoftMax operation 206. N may also be the size of the output tensor of SoftMax operation 206. For a multi-head attention layer, SoftMax operation 206 may be applied to calculate b x h x N times, where b is batch size, h is the number of heads, and N is sequence length.

The operations illustrated in FIG. 2 for an attention layer implements a self-attention mechanism. The attention layer has operations that can perform at least some of the calculations for computing values based on equation 2. The operations illustrated in FIG. 2 can be implemented to perform cross attention or other attention mechanisms as well. The attention layer has operations that can perform at least some of the calculations for computing values based on equation 3.

In some cases, such as the cases illustrated in FIG. 2, a SoftMax operation may be implemented in an attention layer of a transformer-based neural network. The SoftMax operation may follow a scale operation in the attention layer. The SoftMax operation is used in the attention mechanism or the attention layer of transformer-based neural networks because the SoftMax operation helps to determine the importance weights or attention scores assigned to each element in the input sequence when computing the weighted sum of the value vectors. In the attention layer of a transformer-based neural network, the input to the attention layer includes queries, keys, and values, which are derived from the input sequence. The attention scores are computed as a scaled dot product between the query and key vectors, which represent the relevance between the query and each key. However, these attention scores are not necessarily normalized and may have values outside the range of 0 to 1. The SoftMax operation is applied to these attention scores to convert them into a probability distribution, where each value represents the relative importance or weight assigned to the corresponding value vector. The SoftMax operation ensures that the attention weights sum up to 1, which is a desirable property for a probability distribution. The normalization functionality of the SoftMax operation applied in this manner prevents the attention mechanism from assigning excessive importance to a single element or position in the input sequence, which could lead to unstable or biased representations. By applying the SoftMax operation, the attention weights are transformed into a well-behaved probability distribution, allowing the attention mechanism to distribute the importance weights more evenly across the relevant elements of the input sequence. Furthermore, the SoftMax function is differentiable, which allows the transformer-based neural network to be trainable using gradient-based optimization techniques, such as backpropagation.

In some cases, the SoftMax operation may be implemented in an output layer of a neural network. The SoftMax operation may be provided in an output layer which follows a linear layer. The SoftMax operation may be provided in an output layer which follows one or more fully connected layers. In the context of neural networks for classification tasks, the SoftMax operation can be provided in the output layer. Each element of the input tensor (or vector of the input tensor) represents the activation value for a particular class, and the SoftMax function can convert these activation values into probabilities. The class with the highest probability may then chosen as the predicted class. The SoftMax operation is particularly useful when dealing with multi-class classification problems because the SoftMax operation provides a way to represent the probability distribution over all classes. The SoftMax operation is also differentiable, which allows the use of gradient-based optimization techniques for training neural networks.

*Implementing DNNs on processors*

The significant improvements in DNN model size and accuracy coupled with the rapid increase in computing power of execution platforms have led to the adoption of DNN applications even within resource constrained mobile and edge devices that have limited power availability. DNN models may be executed, e.g., for training or inference, by DNN accelerators. A DNN accelerator may be or include one or more data processing units. A data processing unit may also be referred to as a compute block or compute tile. A data processing unit may include one or more processing engines that can carry out neural network operations. A processing engine may include one or more processing cells to perform arithmetic operations associated with neural network operations.

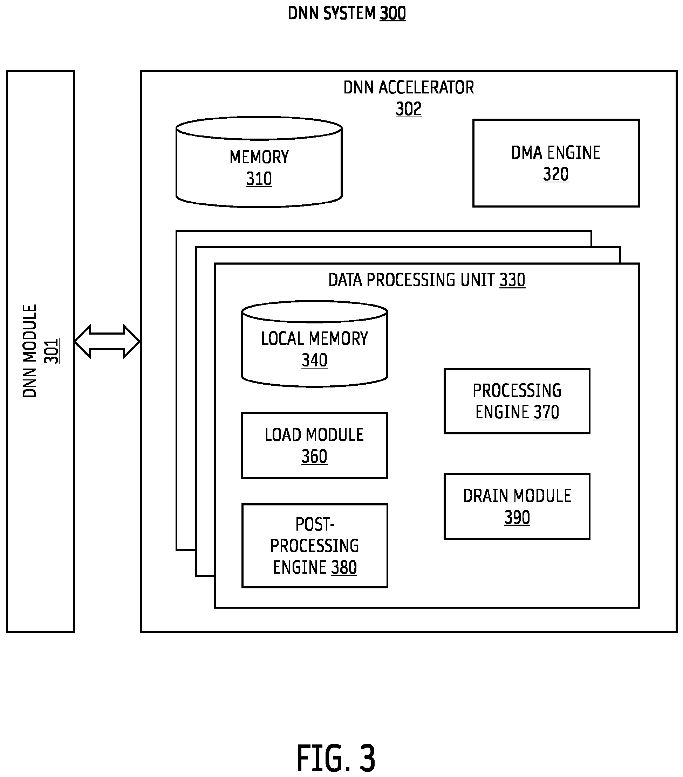

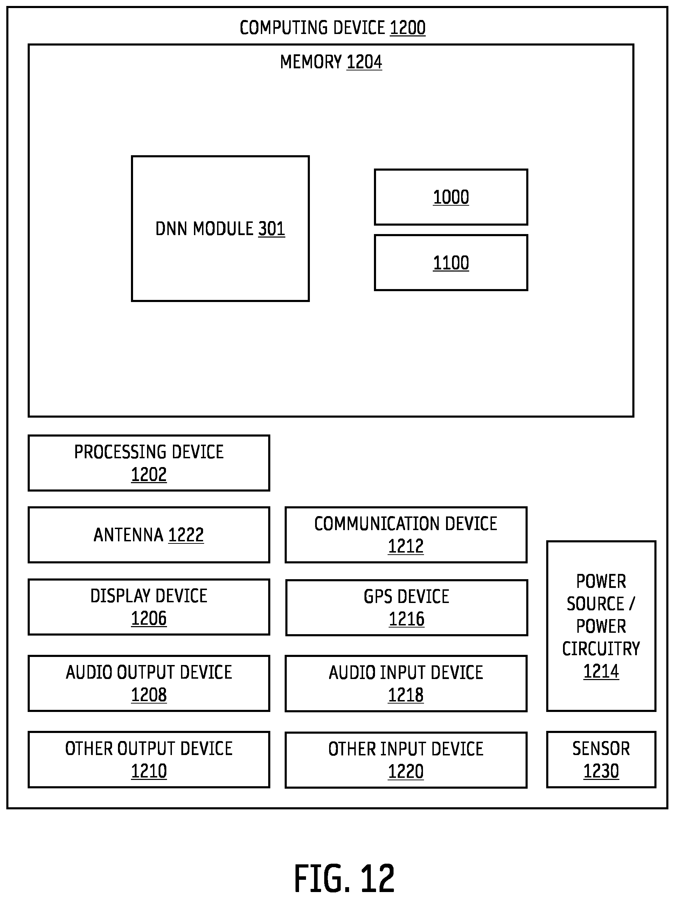

FIG. 3 illustrates DNN system 300, according to some embodiments of the disclosure. The whole DNN system 300 or a part of the DNN system 300 may be implemented in one or more computing devices, such as the computing device 1200 in FIG. 12. DNN system 300 can generate and execute DNNs, such as transformer-based neural networks, convolutional neural networks, and so on. As shown in FIG. 3, DNN system 300 includes DNN module 301 and DNN accelerator 302. In other embodiments, alternative configurations, different or additional components may be included in DNN system 300. For instance, DNN system 300 may include multiple DNN modules or multiple DNN accelerators. Further, functionality attributed to a component of the DNN system 300 may be accomplished by a different component included in the DNN system 300 or a different system. In some embodiments, DNN module 301 and DNN accelerator 302 may include or be implemented by different types of processing units. In an example, the DNN module 301 may be implemented by one or more central processing units (CPUs). The DNN accelerator 302 may also be referred to as a neural processing unit, AI accelerator, or AI processor. The DNN module 301 and DNN accelerator 302 may be implemented in the same chip or as separate chips.

DNN module 301 facilitates generation and deployment of DNNs. In some embodiments, the DNN module 301 may generate and train DNNs. For instance, the DNN module 301 can define the layered architecture of a DNN. The DNN module 301 can also determine the internal parameters of the DNN through a DNN training process. The DNN module 301 may also determine one or more hyperparameters that define how the DNN is trained. An example hyperparameter is a sparsity ratio that defines the sparsity level of one or more deep learning tensors for the DNN.

DNN module 301 may compress DNNs, e.g., during or after training. In some embodiments, DNN module 301 may prune weights in one or more layers of a DNN by changing nonzero valued weight to zeros. DNN module 301 may prune weights based on a target weight sparsity ratio. A weight sparsity ratio may be the ratio of the number of zero-valued weights to the total number of weights. In an example where the DNN module 301 prunes weight during DNN training, the DNN module 301 may prune weight of a layer to achieve a target sparsity ratio after one or more epochs. DNN module 301 may prevent the pruned weights from changing values during the rest of the training process. Alternatively, DNN module 301 may allow the pruned weights to change values so that a pruned, zero-valued weight may have a nonzero value after further training. DNN module 301 may prune weights of the layer again after one or more additional epochs.

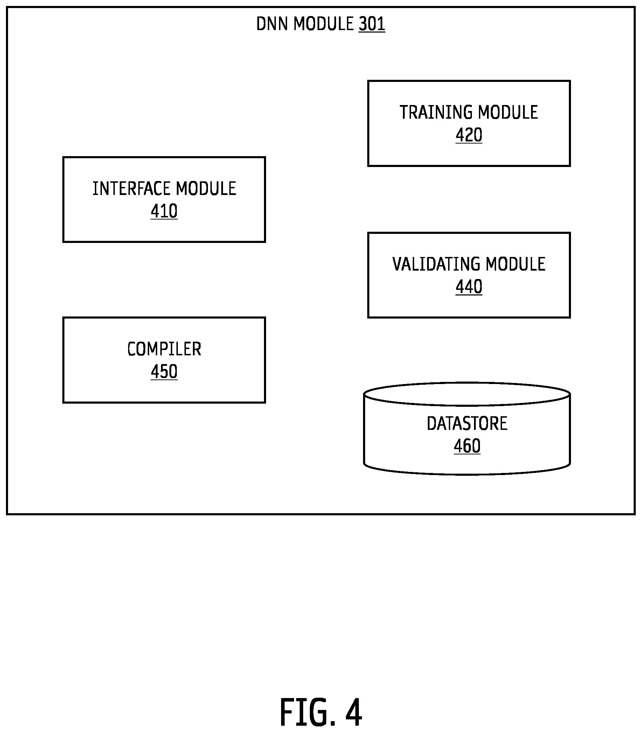

DNN module 301 may deploy trained, compressed, or validated DNNs for use in deep learning applications. In some embodiments, DNN module 301 may distribute trained, compressed, or validated DNNs to devices or systems which may use the DNNs to perform tasks (e.g., image classification, motion planning, etc.) for which the DNNs were trained. In other embodiments, DNN module 301 may facilitate deployment of the DNNs using the DNN accelerator 302. For instance, DNN module 301 may receive data from a device or system coupled with DNN system 300 and input the received data (or data generated by DNN module 301, e.g., based on the received data) into a DNN. DNN module 301 may compile instructions executable by DNN accelerator 302 to perform operations of a DNN in accordance with a model definition of the DNN. DNN module 301 may generate instructions (e.g., configuration files) that control the operation of the DNN accelerator 302 during the DNN execution. DNN module 301 may receive an output of the DNN from the DNN accelerator 302. DNN module 301 may transmit the output of the DNN (or a result of processing the output of the DNN by DNN module 301) to the device or system. In some embodiments, DNN module 301 may control execution processes of trained, compressed, or validated DNNs. DNN module 301 may function as a compiler for DNNs executed by DNN accelerator 302. DNN module 301 may perform compilation of DNNs and generate configuration files, based on which the DNNs may be executed. Certain aspects of the DNN module 301 are described and illustrated in FIG. 4.

DNN accelerator 302 executes DNNs provided by DNN module 301. For instance, DNN accelerator 302 can execute a DNN by running deep learning operations in the DNN. The process of carrying out a deep learning operation is also referred to as a process of executing the deep learning operation or a process of performing the deep learning operation. The execution of the DNN may be for training the DNN or for using the DNN to perform AI tasks.

As shown in FIG. 3, DNN accelerator 302 includes memory 310, DMA (direct memory access) engine 320, and data processing units 330 (individually referred to as "data processing unit 330"). In other embodiments, alternative configurations, different or additional components may be included in DNN accelerator 302. For example, DNN accelerator 302 may include more than one memory 310 or DMA engine 320. As another example, DNN accelerator 302 may include a single data processing unit 330. Further, functionality attributed to a component of DNN accelerator 302 may be accomplished by a different component included in DNN accelerator 302 or by a different system. A component of DNN accelerator 302 may be implemented in hardware, software, firmware, or some combination thereof.

Memory 310 stores data associated with deep learning operations performed by DNN accelerator 302. In some embodiments, memory 310 may store data to be used by the data processing units 330 for DNN execution. memory 310 may store weights, such as weights of convolutional layers, which are determined by training DNNs. The memory 310 may further store inputs to DNN layers or outputs of DNN layers, such as data generated by the data processing units 330 from performing deep learning operations in DNNs. Example deep learning operations include convolutions (also referred to as "convolutional operations"), layer normalization operations, SoftMax operations, matrix multiplication operations, pooling operations, elementwise operations, activation functions, other types of deep learning operations, or some combination thereof. Memory 310 may store instructions executable by DNN accelerator 302, such as instructions executable by data processing unit 330. Memory 310 may be a main memory of DNN accelerator 302. In some embodiments, memory 310 includes one or more dynamic random-access memories (DRAMs).

DMA engine 320 facilitates data transfer between memory 310 and local memories 340 of the data processing units 330. For example, DMA engine 320 can read data from memory 310 and write data into local memory 340 of data processing unit 330. As another example, DMA engine 320 can read data from local memory 340 of data processing unit 330 and write data into memory 310. DMA engine 320 provides a DMA feature that allows data processing unit 330 to initiate data transfer between memory 310 and local memories 340 of the data processing units 330 and to perform other operations while the data transfer is being conducted. In some embodiments, DMA engine 320 may read tensors from memory 310, modify the tensors in a way that is optimized for data processing unit 330 before it writes the tensors into local memories 340 of data processing units 330.

Data processing units 330 perform deep learning operations in DNNs. For instance, data processing unit 330 may execute a DNN layer by running one or more deep learning operations in the DNN layer. Data processing unit 330 may execute a layer, or a portion of a layer, at a time. In some embodiments, the operations of the DNN layers may be run by multiple data processing units 330 in parallel. For instance, multiple data processing units 330 may each perform a portion of a workload for a deep learning operation. Data may be shared between data processing units 330. Data processing unit 330 may also be referred to as a compute block, or a compute tile.

Data processing units 330 may be capable of running various types of deep learning operations, such as convolution, layer normalization, SoftMax operation, pooling, elementwise operation, linear operation, nonlinear operation, and so on. Deep learning operations performed by the data processing units 330 include tensor operations, i.e., operations whose inputs are tensors or operations whose outputs are tensors. In an example, data processing unit 330 receives an input tensor and one or more convolutional kernels and performs a convolution with the input tensor and convolutional kernels. The result of the convolution may be an output tensor, which can be further computed, e.g., by data processing unit 330 or another data processing unit 330.

In the embodiments of FIG. 3, each data processing unit 330 includes local memory 340, load module 360, processing engine 370, post-processing engine 380, and drain module 390. Some or all the components of the data processing unit 330 can be implemented on the same chip. In other embodiments, alternative configurations, different or additional components may be included in the data processing unit 330. Further, functionality attributed to a component of data processing unit 330 may be accomplished by a different component included in the data processing unit 330, a different data processing unit 330, another component of the DNN accelerator 302, or a different system. A component of the data processing unit 330 may be implemented in hardware, software, firmware, or some combination thereof.

Local memory 340 is local to the corresponding data processing unit 330. In the embodiments of FIG. 3, local memory 340 is inside the data processing unit 330. In other embodiments, local memory 340 may be outside the data processing unit 330. Data in local memory 340 may be transferred to or from memory 310, e.g., through DMA engine 320. In some embodiments, data in local memory 340 may be transferred to or from local memory 340 of another data processing unit 330. Local memory 340 may store data received, used, or generated by load module 360, processing engine 370, post-processing engine 380, or drain module 390. Examples of the data may include input activations, weights, output activations, instructions, configuration files, and so on.

In some embodiments, local memory 340 may store tensors to be processed by the processing engine 370 or the post-processing engine 380. The tensors may be input tensors of deep learning operations. Local memory 340 may also store tensors generated by processing engine 370 or post-processing engine 380. The tensors may be output tensors of deep learning operations. The layout of data points of a tensor in local memory 340 may depend on the format in which the tensor is stored. In some embodiments, local memory 340 may store tensors in various formats, including Z-major format, X-major format, and Y-major format. For a tensor with Z-major format, the local memory 340 may store data points having the same (x, y) coordinate contiguously. For instance, the data points having the same (x, y) coordinate may be stored at a sequence of memory addresses the local memory 340. For a tensor with the ZXY format or ZYX format, local memory 340 may store data points having the same (x, y) coordinate contiguously. For instance, the data points having the same (x, y) coordinate may be stored at a sequence of memory addresses in local memory 340. For a tensor with X-major format, local memory 340 may store data points having the same (y, z) coordinate contiguously. For a tensor with Y-major format, local memory 340 may store data points having the same (x, z) coordinate contiguously.

In some embodiments, local memory 340 may store dense tensors (e.g., dense activation tensors, dense weight tensors, etc.), sparse tensors (e.g., sparse activation tensors, sparse weight tensors, etc.), and so on. A dense tensor may be a tensor from which zero-valued elements (if any) are not removed. A dense tensor may be converted to a sparse tensor by removing one or more zero-valued elements in the dense tensor. A sparse tensor may also be referred to as a compressed tensor or packed tensor. The process of converting a dense tensor to a sparse tensor may be referred to as sparsity encoding. Sparsity encoding may also generate a sparsity tensor. Each element in the sparsity tensor may correspond to a different element in the dense tensor and indicate whether the element in the dense tensor is zero or not. The sparsity tensor may indicate positions of elements of the sparse tensor in the dense tensor. The sparsity tensor may be a sparsity bitmap, each element of which is a bit. A sparse tensor may be converted to a dense tensor through a densifying process, in which one or more zeros may be added to the sparse tensor based on the sparsity tensor.

In some embodiments, local memory 340 includes one or more static random-access memories (SRAMs). Local memory 340 may be byte-addressable, and each memory address identifies a single byte (eight bits) of storage. In some embodiments, local memory 340 may include memory banks. The number of data banks in the local memory 340 may be 16, 64, 128, 356, 512, 1024, 2048, or other numbers. A memory bank may include a plurality of storage units. In an example, a data bank may include 8, 16, 64, or a different number of storage units. A memory bank or a storage unit in a memory bank may have a memory address. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from local memory 340 in a single read cycle. In other embodiments, 16 bits can be transferred from local memory 340 in multiple read cycles, such as two cycles.

Load module 360 loads data from local memory 340 to the processing engine 370 or to post-processing engine 380. Load module 360 may read tensors from the local memory 340. The tensors may include sparse activation tensors, sparse weight tensors, activation sparsity tensors, weight sparsity tensors, and so on. In some embodiments, load module 360 may load data based on a sparsity mode. Load module 360 may select different data to transmit to the processing engine 370 in different sparsity modes.

Load module 360 loads instructions, e.g., configuration files, from local memory 340 to the processing engine 370. The instructions may be used to configure or control processing cells of processing engine 370 to perform one or more deep neural network operations.

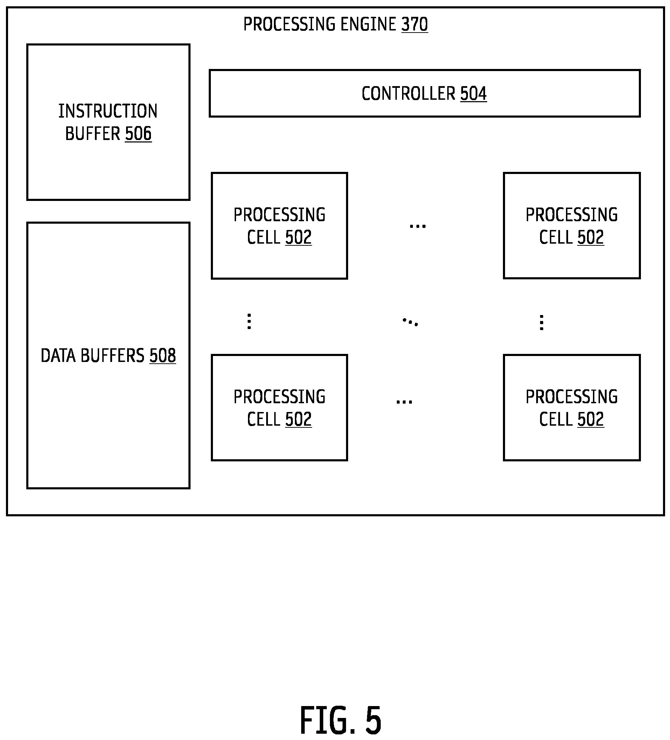

Processing engine 370 performs neural network operations of DNNs. An exemplary processing engine 370 is described and illustrated in FIG. 5.

Post-processing engine 380 processes outputs of processing engine 370. The post-processing engine 380 may include one or more post-processing elements. In some embodiments, the post-processing elements in the post-processing engine 380 may be arranged in an arrangement that has rows and columns. In some embodiments, post-processing engine 380 computes activation functions. Post-processing engine 380 may receive outputs of processing engine 370 as inputs to the activation functions. In addition or alternative to activation functions, post-processing engine 380 may perform other types of post-processing on outputs of processing engine 370. For instance, post-processing engine 380 may apply a bias on an output of processing engine 370. In some embodiments, post-processing engine 380 may be bypassed for certain neural network operations.

Drain module 390 drains data from processing engine 370 and/or from post-processing engine 380. Drain module 390 may write the data to local memory 340. The drained data may be tensors, such as output tensors of neural network operations. In some embodiments, drain module 390 may drain data on a cell level of processing engine 370. For each processing cell, drain module 390 may drain outputs of processing elements in the processing cell based on a row index or column index of each processing element. For instance, drain module 390 may use a sequence of cycles to drain data from a processing cell. Drain module 390 may drain the output of some of the processing elements in each cycle. The sequence of the cycles may be configured based on a configuration parameter indicating the operation mode of load module 360. The drained data, e.g., tensors, may be further loaded to memory 310, e.g., through the DMA engine 320. Additionally or alternatively, the drained data may be loaded by the load module 360 to the processing engine 370 for further computation, e.g., for performing a deep learning operation in the next layer.

FIG. 4 illustrates DNN module 301, according to some embodiments of the disclosure. DNN module 301 includes interface module 410, training module 420, validating module 440, and datastore 460. In other embodiments, alternative configurations, different or additional components may be included in the DNN module 301. Further, functionality attributed to a component of DNN module 301 may be accomplished by a different component included in DNN module 301 or a different module or system.

Interface module 410 facilitates communications of DNN module 301 with other modules or systems. For example, interface module 410 establishes communications between DNN module 301 with an external datastore to receive data that can be used to train DNNs or input into DNNs to perform tasks. As another example, interface module 410 supports DNN module 301 to distribute DNNs to other systems, e.g., computing devices configured to apply DNNs to perform tasks.

Training module 420 trains DNNs by using a training dataset. Training module 420 forms the training dataset. In an example where training module 420 trains an DNN to recognize objects in images, the training dataset includes training images and training labels. The training labels describe ground-truth classifications of objects in the training images. In some embodiments, each label in the training dataset corresponds to an object in a training image. In an example where training module 420 trains a transformer-based neural network to predict the next token, the training data set may include a large library of sequences of tokens. In some embodiments, a part of the training dataset may be used to initially train the DNN, and the rest of the training dataset may be held back as a validation subset used by validating module 440 to validate performance of a trained DNN. The portion of the training dataset not including the tuning subset and the validation subset may be used to train the DNN.

Training module 420 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 5, 10, 50, 100, 500, 1000, or even larger.

Training module 420 can define the architecture of the DNN, e.g., based on some of the hyperparameters. In some cases, training module 420 may receive a model definition that defines or specifies the architecture of the DNN. The architecture of the DNN can include a plurality of layers. Examples of layers may include convolutional layers, pooling layers, fully connected layers, normalization layers, SoftMax or logit layers, and so on. After training module 420 defines the architecture of the DNN, training module 420 inputs a training dataset into the DNN. The training dataset includes a plurality of training samples. The training module 420 modifies the parameters inside the DNN ("internal parameters of the DNN") to minimize the error between labels of the training objects that are generated by the DNN and the ground-truth labels of the objects. The internal parameters include weights used in layers of the DNN. In some embodiments, the training module 420 uses a cost function to minimize the error.

Training module 420 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After training module 420 finishes the predetermined number of epochs, training module 420 may stop updating the parameters in the DNN. The DNN having the updated parameters is referred to as a trained DNN.

Validating module 440 verifies accuracy of trained DNNs. In some embodiments, validating module 440 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, validating module 440 may determine an accuracy score measuring the precision, recall, or a combination of precision and recall of the DNN. The validating module 440 may use the following metrics to determine the accuracy score: Precision = TP / (TP + FP) and Recall = TP / (TP + FN), where precision may be how many the DNN correctly predicted (TP or true positives) out of the total it predicted (TP + FP or false positives), and recall may be how many the DNN correctly predicted (TP) out of the total number of objects that did have the property in question (TP + FN or false negatives). The F-score (F-score = 2 * PR / (P + R)) unifies precision and recall into a single measure.

Validating module 440 may compare the accuracy score with a threshold score. In an example where validating module 440 determines that the accuracy score of the DNN is less than the threshold score, validating module 440 instructs th training module 420 to re-train the DNN. In one embodiment, training module 420 may iteratively re-train the DNN until the occurrence of a stopping condition, such as the accuracy measurement indication that the DNN may be sufficiently accurate, or a number of training rounds having taken place.

Compiler 450 compiles information of DNNs, such as the model definition, to executable instructions (e.g., configuration files) that can be executed, e.g., by DNN accelerator 302, to carry out neural network operations in DNNs. The model definition may include one or more neural network operations to be performed by the DNN. In some embodiments, compiler 450 may generate a graph representing a DNN. The graph may include nodes and edges. A node may represent a specific neural network operation in the DNN. An edge may connect two nodes and represent a connection between the two corresponding neural network operations. In an example, an edge may encode a tensor that flows from one of the neural network operations to the other neural network operation. The tensor may be an output tensor of the first neural network operation and an input tensor of the second neural network operation. The edge may encode one or more attributes of the tensor, such as size, shape, storage format, and so on. Compiler 450 may use the graph to generate instructions (e.g., configuration files, configuration parameters, etc.). The instructions may include low-level machine code that can can be executed by components of the DNN accelerator 302 (e.g., processing engine 370). The low-level machine code may be in a binary format, which may be loaded onto DNN accelerator 302 and executed by components of the DNN accelerator 302 (e.g., processing engine 370). The instructions would be executed by components of the DNN accelerator 302 (e.g., processing engine 370) to execute the DNN.

Datastore 460 stores data received, generated, used, or otherwise associated with the DNN module 301. For example, datastore 460 stores the datasets used by training module 420 and validating module 440. Datastore 460 may also store data generated by training module 420 and validating module 440, such as the hyperparameters for training DNNs, internal parameters of trained DNNs (e.g., weights, etc.), data for sparsity acceleration (e.g., sparsity bitmap, etc.), and so on. Datastore 460 may store configuration parameters, configuration files, instructions generated by compiler 450, etc. The datastore 460 may include one or more memories. In the embodiment of FIG. 4, datastore 460 is a component of DNN module 301. In other embodiments, datastore 460 may be external to DNN module 301 and communicate with the DNN module 301 through a network.

FIG. 5 illustrates processing engine 370, according to some embodiments of the disclosure. Processing engine 370 may be included as part of a data processing unit, such as data processing unit 330 of FIG. 3. Processing engine 370 may include one or more processing cells 502. In some embodiments, the processing cells 502 may be arranged in one or more rows and/or one or more columns in the processing engine 370. In some embodiments, the processing cells 502 may be arranged as one or more sets or arrays of processing cells 502 performing different operations.

Each processing cell may include one or more processing elements. In some cases, a processing cell includes a single processing element. In some cases, a processing cell includes a plurality of processing elements. The processing elements may be arranged as an array. The processing elements may be arranged in rows and/or columns. In some cases, a processing cell may include processing element(s) that perform the same operation. In some cases, a processing cell may include processing element(s) that perform different operations. In some cases, at least some of the processing element(s) in a processing cell may be arranged to perform operations in parallel. In some cases, at least some of the processing element(s) in a processing cell may be arranged to perform operations serially.

A processing element may perform an arithmetic operation associated with neural network operations or DNN operations. In some cases, the one or more processing elements that may be arranged in an array that includes rows and columns. Examples of processing elements may include a multiply unit, a division unit, a scaling unit, an adding unit, an accumulator unit a subtractor unit, a logarithmic unit, an exponentiation unit, a multiply-accumulate (MAC) unit, a bit shift unit, a square root unit, etc. The processing elements in processing cells may be arranged to perform an arithmetic operation on a vector of inputs to generate a vector of outputs (in parallel), sometimes referred to as vector processing. The processing elements in processing cells may perform scalar operations.

Processing engine 370 may include controller 504, which may configure circuitry of one or more processing cells 502 to perform the arithmetic operations. In some cases, controller 504 may configure one or more processing cells 502 (or individual processing elements in a processing cell 502) to perform operations in a particular sequence or manner. In some cases, controller 504 may configure one or more processing cells 502 (or individual processing elements in a processing cell 502) according to instructions loaded in instruction buffer 506. Controller 504 may include a program counter to determine the instructions loaded in instruction buffer 506 to be executed by one or more processing cells 502 (or individual processing elements in a processing cell 502).

The instructions loaded in instruction buffer 506 (e.g., by load module 360 of FIG. 3) may signal which processing cells 502 (or individual processing elements in a processing cell 502) is to execute or carry out one or more operations.

Data may be loaded in data buffers 508 by load module 360 of FIG. 3. The data may be used by processing cells 502. Data produced by processing cells 502 may be drained from data buffers 508 by drain module 390 to local memory 340 of FIG. 3.

Data buffers 508 may include one or more of: one or more input data buffers, and one or more output data buffers. Data buffers 508 may include one or more weights/parameters buffers. Data buffers 508 may store operands for one or more processing elements of processing cell 502. Data buffers 508 may store generated outputs of one or more processing elements of processing cell 502.

The instructions loaded in instruction buffer 506 may signal which data stored in data buffers 508 is to be processed by processing cells 502 (or individual processing elements in a processing cell 502). In some cases, the processing cells 502 (or individual processing elements in a processing cell 502) may read data from data buffers 508 at a default location for the processing cell 502 or an individual processing element in the processing cell 502.

The instructions loaded in instruction buffer 506 may signal where to store output data in data buffers 508 after processing cells 502 produces the output data. In some cases, the processing cells 502 (or individual processing elements in a processing cell 502) may write data to data buffers 508 at a default location for the processing cell 502 or an individual processing element in the processing cell 502.

Load module 360 of FIG. 3 may load data to certain locations in data buffers 508. Drain module 390 of FIG. 3 may drain data from data buffers 508 to be stored in local memory 340 and/or memory 310 of FIG. 3.

Referring to FIGS. 3-5, DNN system 300 illustrates one implementation of a processor designed to accelerate execution of DNNs. The architecture design of a processor can vary depending on the application requirements of the processor. The architecture design can vary based on the number of data processing units, the number of processing engines, the number of processing cells, support for vector processing, support for sparsity modes, the types or collection of processing elements, amount of memory and buffer size, etc.

Performance of an execution of a DNN on DNN system 300 may be limited by availability of certain types of processing cells 502 or certain types of processing elements). The performance may be limited by how much parallel processing, such as vector processing, the architecture can support. The performance may be limited by the amount of memory available in data buffers 508. The performance may be limited by the amount of memory available in local memory 340. The performance may be limited by the speed (e.g., number of cycles) of memory access at different levels of caching or memory (e.g., speed of load module 360, speed of drain module 390, etc.). The performance may be limited by how many cycles processing cell 502 or one or more processing elements in processing cell 502 would take to perform an operation. In some cases, the performance may be limited by how neural network operations, e.g., MatMul operation, SoftMax operation, etc. are compiled and executed using processing cell 502 or one or more processing elements in processing cell 502.

*Naïve 3-pass version of SoftMax*

FIG. 6 illustrates an exemplary naïve 3-pass version of operations to perform SoftMax on an input tensor, according to some embodiments of the disclosure. The SoftMax operation is mathematically defined by equation 1. The input tensor (or input vector) of the SoftMax operation may include N elements $x_i$, where i = 1, ... N. The input tensor may have a sequence length of N. The output tensor (or output vector) of the SoftMax operation may include N elements $y_i$, where i = 1, ... N. The output tensor may have a sequence length of N. The mathematical representation of the SoftMax operation is reproduced here:

$$y_i = \frac{e^{x_i - \max(x_i)}}{\sum_{j=1}^{N} e^{x_i - \max(x_i)}} \quad \textbf{(eq. 1)}$$

In 602, a maximum value m is initialized as negative infinity. A denominator value d is initialized as 0.

In 604, a first pass over the elements of the input tensor $x_i$ is performed. The first pass iterates through the elements of the input tensor $x_i$ to determine a maximum value m of the elements of the input tensor $x_i$. For each element $x_j$ of the input tensor (for j in range (1,N)), if the element $x_j$ is greater than the maximum value m (if $(x_j > m)$), then the maximum value m is set to be the element $x_j$ (m = $x_j$). If the element $x_j$ is not greater than the maximum value m (if $(x_j > m)$), then the maximum value m is left unchanged. The maximum value m determined in the first pass corresponds to max $(x_i)$ in equation 1.

In 606, a second pass over the elements of the input tensor $x_i$ is performed. The second pass iterates through the elements of the input tensor $x_i$ to determine a denominator value d. For each element $x_j$ of the input tensor (for j in range (1,N)), the denominator value d is updated to be a sum of the denominator value and a natural base e raised to the power of the element $x_j$ subtracted by the maximum value m ($d \leftarrow d + e^{x_j - m}$). The denominator value d determined in the second pass corresponds to $\sum_{j=1}^{N} e^{x_i - \max(x_i)}$ in equation 1.

In 608, a third pass over the elements of the input tensor $x_i$ is performed. The third pass iterates through the elements of the input tensor $x_i$ to determine the values of the output tensor $y_i$. For each element $x_j$ of the input tensor (for j in range (1,N)), the element $x_j$ of the input tensor is updated to be a natural base e raised to the power of the element $x_j$ subtracted by the maximum value m ($e^{x_j - m}$) is divided by the denominator value d determined in the second pass ($x_j \leftarrow e^{x_j - m}/d$). The input tensor $x_i$ with updated values determined in the third pass may be output as the output tensor $y_i$. The values of the output tensor $y_i$ corresponds to $\frac{e^{x_i - \max(x_i)}}{\sum_{j=1}^{N} e^{x_i - \max(x_i)}}$ in equation 1.

In practice, values calculated in 606 for $e^{x_j - m}$ are cached and reused in 608 to avoid having to perform the same exponentiations again. This makes the naïve 3-pass version of SoftMax memory bound, or phrased differently, the performance may be limited by the amount of fast memory available to store the values calculated in 606 for $e^{x_j - m}$.

*2-pass version of SoftMax*

FIG. 7 illustrates an exemplary 2-pass version of operations to perform SoftMax on an input tensor, according to some embodiments of the disclosure. The SoftMax operation is mathematically defined by equation 1. The input tensor (or input vector) of the SoftMax operation may include N elements $x_i$, where i = 1, ... N. The input tensor may have a sequence length of N. The output tensor (or output vector) of the SoftMax operation may include N elements $y_i$, where i = 1, ... N. The output tensor may have a sequence length of N. The mathematical representation of the SoftMax operation is reproduced here:

$$y_i = \frac{e^{x_i - \max(x_i)}}{\sum_{j=1}^{N} e^{x_i - \max(x_i)}} \quad \textbf{(eq. 1)}$$

In 702, a maximum value m is initialized as negative infinity. A denominator value d is initialized as 0.

In 704, a first pass over the elements of the input tensor $x_i$ is performed. The first pass iterates through the elements of the input tensor $x_i$ to determine a maximum value m of the elements of the input tensor $x_i$ and the denominator value d. For each element $x_j$ of the input tensor (for j in range (1,N)), if the element $x_j$ is greater than the maximum value m (if $(x_j > m)$), then the denominator value d is set to be a product of the denominator value d and a natural base e raised to the power of the maximum value m subtracted by element $x_j$ ($d = d. e^{m-x_j}$), and the maximum value m is set to be the element $x_j$ ($m = x_j$). If the element $x_j$ is not greater than the maximum value m (if $(x_j > m)$), then the maximum value m is left unchanged. Regardless of whether the element $x_j$ is or is not greater than the maximum value m, for each element $x_j$ of the input tensor (for j in range (1,N)), the denominator value d is updated to be a sum of the denominator value d and a natural base e raised to the power of the element $x_j$ subtracted by the maximum value m ($d \leftarrow d + e^{x_j-m}$). The maximum value m determined in the first pass corresponds to max $(x_i)$ in equation 1. The denominator value d determined in the first pass corresponds to $\sum_{j=1}^{N} e^{x_i - \max(x_i)}$ in equation 1. The first pass in 704 combines the first pass in 602 and the second pass in 604 into just one pass over the elements the elements of the input tensor $x_j$.

In 706, a second pass over the elements of the input tensor $x_i$ is performed. The second pass iterates through the elements of the input tensor $x_i$ to determine the values of the output tensor $y_i$. For each element $x_j$ of the input tensor (for j in range (1,N)), the element $x_j$ of the input tensor is updated to be a natural base e raised to the power of the element $x_j$ subtracted by the maximum value m ($e^{x_j-m}$), divided by the denominator value d determined in the second pass ($d = \sum_{j=1}^{N} e^{x_i - \max(x_i)}$). This update may correspond to $x_j \leftarrow e^{x_j-m}/d$ seen in 706. The input tensor $x_i$ with updated values determined in the second pass may be output as the output tensor $y_i$. The values of the output tensor $y_i$ corresponds to $\frac{e^{x_i-\max(x_i)}}{\sum_{j=1}^{N} e^{x_i-\max(x_i)}}$ in equation 1.

*Modified 2-pass version of SoftMax*

An insight to modifying the naïve 3-pass version (seen in FIG. 6) and the 2-pass version (seen in FIG. 7) involves recognizing that equation 1 may be calculated differently using a different set of operations. The mathematical representation of the SoftMax operation is reproduced here:

$$y_i = \frac{e^{x_i - \max(x_i)}}{\sum_{j=1}^{N} e^{x_i - \max(x_i)}} \quad \textbf{(eq. 1)}$$

Rather than directly calculating SoftMax straight away, it is possible to first calculate the logarithm of the SoftMax, then exponentiate the logarithm of the SoftMax to obtain SoftMax. The logarithm of the SoftMax can be reformulated exactly as follows:

$$\ln(y_i) = \ln\left(\frac{e^{x_i - \max(x_i)}}{\sum_{j=1}^{N} e^{x_i - \max(x_i)}}\right) = \ln\left(e^{x_i - \max(x_i)}\right) - \ln\left(\sum_{j=1}^{N} e^{x_i - \max(x_i)}\right)$$

$$= x_i - \max(x_i) - \ln(d) = x_i - (\max(x_i) - \ln(d)) = x_i - C \quad \textbf{(eq. 4)}$$

Where

$$d = \sum_{j=1}^{N} e^{x_i - \max(x_i)} \quad \textbf{(eq. 5)}$$

$$c = \max(x_i) + \ln(d) \quad \textbf{(eq. 6)}$$

Raising a natural base e to the logarithm of the SoftMax yields the SoftMax as follows:

$$y_i = e^{\ln(y_i)} = e^{x_i - \max(x_i) - \ln(d)} = e^{x_i - c} \quad \textbf{(eq. 7)}$$

Using equations 4-8 to produce SoftMax does not require performing N divisions, e.g., as previously needed in the naïve 3-pass version illustrated in FIG. 6 and in the 2-pass version illustrated in FIG. 7 to calculate $\dfrac{e^{x_i - \max(x_i)}}{d}$. Two scalar operations, e.g., to calculate $\ln(d)$, and $c = \max(x_i) + \ln(d)$ are introduced through the use of equations 4-7.

FIG. 8 illustrates an exemplary modified 2-pass version of operations to perform SoftMax on an input tensor, according to some embodiments of the disclosure. The input tensor (or input vector) of the SoftMax operation may include N elements $x_i$, where i = 1, ... N. The input tensor may have a sequence length of N. The output tensor (or output vector) of the SoftMax operation may include N elements $y_i$, where i = 1, ... N. The output tensor may have a sequence length of N. The modified 2-pass version of operations follows the mathematical formulations of equations 4-7.

Referring briefly to FIGS. 3-4, when DNN module 301 (e.g., a compiler 450) receives or determines a neural network model definition specifying a SoftMax operation being applied to an input tensor, DNN module 301 may convert the SoftMax operation into instructions that are executable by one or more processing engines (e.g., processing engine 370 of FIG. 3) to carry out the SoftMax operation. DNN module 301 may generate instructions that are executable by the one or more processing engines. Rather than generating instructions that perform operations illustrated in FIGS. 6-7 to carry out naïve 3-pass version and the 2-pass version of SoftMax, DNN module 301 may generate instructions to carry out the operations seen in the modified 2-pass version as illustrated in FIG. 8. The instructions would cause the one or more processing engines of DNN accelerator 302 (e.g., processing engine 370 of FIG. 3) to carry out the operations seen in the modified 2-pass version as illustrated in FIG. 8. The instructions can cause the one or more processing engines of DNN accelerator 302 to perform the SoftMax operation on an input tensor.

A processing engine may receive an input tensor $x_i$ to a SoftMax operation of a neural network. For example, the processing engine may receive an input tensor $x_i$ to SoftMax operation 206 of FIG. 2.

In 802, a maximum value m is initialized as negative infinity. A denominator value d is initialized as 0.

In 804, a first pass over the elements of the input tensor $x_i$ is performed by the processing engine. The processing engine may perform a first pass over the elements of the input tensor $x_i$, e.g., iterates through the elements of the input tensor $x_i$, to maintain a running maximum value m and a denominator value d based on one or more elements of the input tensor $x_i$.

For each element $x_j$ of the input tensor (for j in range (1,N)), if the element $x_j$ is greater than the maximum value m (if $(x_j > m)$), then the denominator value d is set to be a product of the denominator value d and a natural base e raised to the power of the maximum value m subtracted by element $x_j$ ($d = d.e^{m-x_j}$), and the maximum value m is set to be the element $x_j$ ($m = x_j$). If the element $x_j$ is not greater than the maximum value m (if $(x_j > m)$), then the maximum value m is left unchanged. Regardless of whether the element $x_j$ is or is not greater than the maximum value m, for each element $x_j$ of the input tensor (for j in range (1,N)), the denominator value d is updated to be a sum of the denominator value d and a natural base raised to the power of the element $x_j$ subtracted by the maximum value m ($d \leftarrow d + e^{x_j - m}$). By performing this update of the denominator value d as the processor engine iterates through the elements $x_i$ of the input tensor, the denominator value d at the end of the iterations over the elements $x_i$ of the input tensor would be equal to $\sum_{j=1}^{N} e^{x_i - \max(x_i)}$ according to equation 5.

In some embodiments, maintaining the running maximum value m and a denominator value d in 804 comprises determining whether a first element $x_j$ of the input tensor is greater than the running maximum value m. Maintaining the running maximum value m and a denominator value d in 804 may further include, in response to determining that the first element $x_j$ of the input tensor is greater than the running maximum value m, determining a product of the denominator value d and a base raised to an exponent. Determining the product of the denominator value d and a base raised to an exponent may include determining $d \cdot e^{m-x_j}$ seen in 804. The base may be a natural number $e$. The exponent may be the running maximum value m subtracted by the first element $x_j$ of the input tensor. The exponent may correspond to $m - x_j$ seen in 804. Maintaining the running maximum value m and a denominator value d in 804 may further include, in response to determining that the first element $x_j$ of the input tensor is greater than the running maximum value m, updating the running maximum value m based on the first element $x_j$ of the input tensor. Updating the running maximum value may correspond to m = $x_j$ seen in 804.

In some embodiments, maintaining the running maximum value M and a denominator value d in 804 may further include, after the iterations $x_i$ over the elements of the input tensor in 804 are performed, updating the denominator value d based on a sum of the product (e.g., d $\cdot e^{m-x_j}$) and the base raised to an exponent (e.g., $e^{x_j - m}$). The exponent may be the first element $x_j$ of the input tensor subtracted by the running maximum value m ($x_j - m$). The sum may correspond to d + $e^{x_j - m}$ of 804. This update of the denominator value d may correspond to $d \leftarrow d + e^{x_j - m}$, where the denominator value d at the end of the iterations over the elements $x_i$ of the input tensor would be equal to $\sum_{j=1}^{N} e^{x_i - \max(x_i)}$ according to equation 5.

In 804, after iterating over the elements of the input tensor $x_i$ to obtain the denominator value d (e.g., $d = \sum_{j=1}^{N} e^{x_i - \max(x_i)}$) and the running maximum value m (e.g., $m = \max(x_j)$), the processing engine updates the denominator value d based on a logarithm of the denominator value d, e.g., ln(d). This update corresponds to $d \leftarrow \ln(d)$ in 804. The logarithm of the denominator value d may be a natural logarithm of the denominator value, or be a logarithm having the natural number e as the base. The update of the denominator value d based on the logarithm of the denominator value d calculates the value ln(d) used in equation 6.

In 804, after updating the denominator value d based on the logarithm of the denominator value d, the processing engine determines an operand value c based on a sum of the denominator value d (which has the value ln(d)) and the running maximum value m. The sum may correspond to $d + m$ in 804. This determination corresponds to $c = d + m$ in 804. This determination corresponds to calculating the value c according to equation 6.

Referring back to 704 of FIG. 7 performing a 2-pass version of SoftMax, 704 may cause the processing engine to execute P operations to complete operations in 704. Referring back to 804 of FIG. 8 performing a modified 2-pass version of SoftMax, 804 may cause the processing engine to execute P operations plus a scalar logarithmic operation (e.g., to perform $d \leftarrow \ln(d)$ in 804) and a scalar 2-input addition (e.g., to perform $c = d + m$ in 804) to complete operations in 804.

In 806, a second pass over the elements of the input tensor $x_i$ is performed by the processing engine. The second pass iterates through the elements of the input tensor $x_i$ to determine the values of the output tensor $y_i$. For each element $x_j$ of the input tensor (for j in range (1,N)), the element $x_j$ of the input tensor is updated to be a natural base e raised to a power of the element $x_j$ subtracted by the operand value c. The power may correspond to $x_j - c$ seen in 806. This update may correspond to $x_j \leftarrow e^{x_j - c}$ seen in 806. The input tensor $x_i$ with updated values determined in the second pass may be output as the output tensor $y_i$. The values of the output tensor $y_i$ corresponds to $y_i = e^{x_i - c}$ in equation 7.

In some embodiments, the second pass over the elements of the input tensor $x_i$ involves the processor engine updating at least a first element $x_j$ of the input tensor by raising a base to an exponent (e.g., $e^{x_j - c}$). The exponent may be the first element $x_j$ of the input tensor subtracted by the operand value c. The exponent may correspond to $x_j - c$ seen in 806. This updating may correspond to $x_j \leftarrow e^{x_j - c}$ seen in 806. The operations in 806 finally computes the SoftMax values of the output tensor $y_i = e^{x_i - c}$ according to equation 7.

Referring back to 706 of FIG. 7 performing a 2-pass version of SoftMax, 706 may cause the processing engine to execute N 2-input subtractions (to determine $x_j - m$), N exponentials (to determine $e^{x_j - m}$), and N divisions (to determine $e^{x_j - m}/d$) to complete operations in 706. Referring back to 806 of FIG. 8 performing a modified 2-pass version of SoftMax, 806 may cause the processing engine to execute N 2-input subtractions (to determine $x_j - c$), N exponentials (to determine $e^{x_j - c}$) to complete operations in 806. 806 is absent of divisions.

Even though 804 adds 2 scalar operations, saving N divisions in 806 means that the computational cost of performing SoftMax operation is dramatically reduced. The SoftMax operation is performed/repeated N times for sequence length N in an attention layer of a transformer-based neural network. This means that the modified 2-pass version of SoftMax saves a quadratic number ($N^2$) of divisions (e.g., FP32 inverse multiplications) and only adds a linear number (N) of scalar operations. Because the modified 2-pass version of SoftMax implements operations corresponding to equations 4-7, and equations 4-7 are mathematically equivalent to equation 1, the modified 2-pass version of SoftMax illustrated in FIG. 8 would not lead to a loss of accuracy. The computational savings increase as the sequence length N becomes longer.

After the instructions are executed by the processing engine, the processing engine may output an output tensor $y_i$ having results of the SoftMax operation. In some cases, the processing engine may output the input tensor $x_i$ (having updated values for its elements) as the output tensor $y_i$. The output tensor $y_i$ comprising the one or more elements of the input tensor $x_i$ converted into one or more probabilities of a probability distribution. One or more values of the one or more elements of the output tensor $y_i$ are within a range from 0 to 1 such that a sum of the one or more values of the one or more elements of the output tensor $y_i$ equals to 1.

*Modified 2-pass version of SoftMax and matrix multiplication with approximation*

A further insight involves recognizing that equations 4-7 may be approximated using integer arithmetic to facilitate using faster binary and integer operations in the processing engine. Rather than performing exponentials using a base of e, an approximation or quantization technique may be used to modify the operations illustrated in FIG. 8. Specifically, exponentials involving a base of e may be replaced by exponentials involving a base of 2. Exponentials involving a base of e would require floating point operations. Exponentials involving a base of 2 can be implemented efficiently using bit shifts and integer operations without requiring floating point operations. Multiplications with numbers expressed as a power of 2 can also be performed faster using bit shifts.

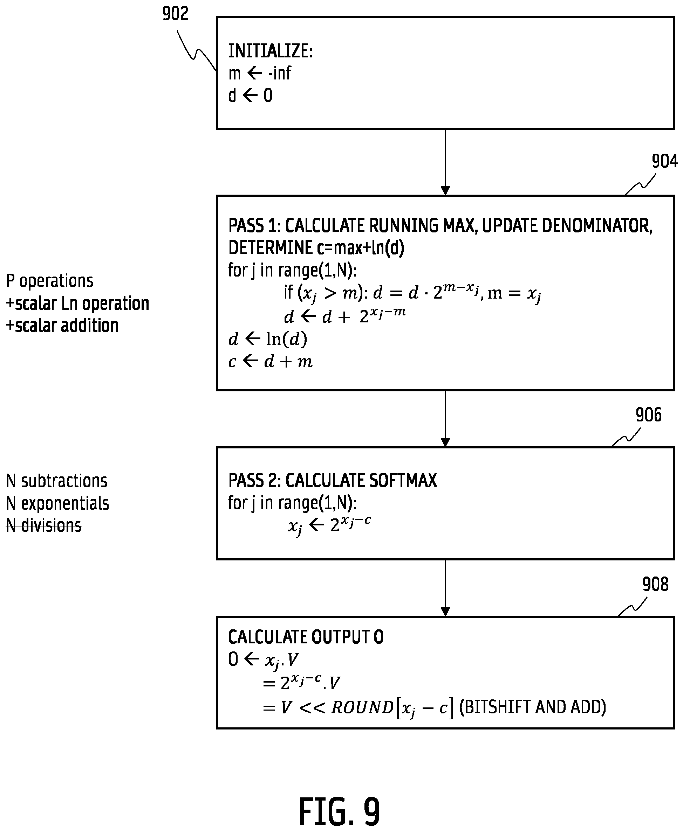

FIG. 9 illustrates an exemplary modified 2-pass version of operations with approximation to perform SoftMax on an input tensor and matrix multiplication of an output tensor and a matrix V, according to some embodiments of the disclosure. The input tensor (or input vector) of the SoftMax operation may include N elements $x_i$, where i = 1, ... N. The input tensor may have a sequence length of N. The output tensor (or output vector) of the SoftMax operation may include N elements $y_i$, where i = 1, ... N. The output tensor may have a sequence length of N. The output tensor (or output vector) of the SoftMax operation may be multiplied with matrix V.

Referring briefly to FIGS. 3-4, when DNN module 301 (e.g., a compiler 450) receives or determines a neural network model definition specifying a SoftMax operation being applied to the input tensor and a matrix multiplication operation on the output tensor and the matrix, DNN module 301 may convert the SoftMax operation and the matrix multiplication operation into instructions that are executable by one or more processing engines (e.g., processing engine 370 of FIG. 3) to carry out the SoftMax operation and the matrix multiplication operation. DNN module 301 may generate instructions that are executable by the one or more processing engines. Rather than generating instructions that perform operations illustrated in FIGS. 6-7 to carry out naïve 3-pass version and the 2-pass version of SoftMax, DNN module 301 may generate instructions to carry out the operations seen in the modified 2-pass version with approximation as illustrated in FIG. 9. The instructions would cause the one or more processing engines of DNN accelerator 302 (e.g., processing engine 370 of FIG. 3) to carry out the operations seen in the modified 2-pass version with approximation as illustrated in FIG. 9. The instructions can cause the one or more processing engines of DNN accelerator 302 to perform the SoftMax operation on the input tensor and the matrix multiplication operation on the output tensor and a matrix V.

A processing engine may receive an input tensor $x_i$ to a SoftMax operation of a neural network. For example, the processing engine may receive an input tensor $x_i$ to SoftMax operation 206 of FIG. 2.

In 902, a maximum value m is initialized as negative infinity. A denominator value d is initialized as 0.

In 904, a first pass over the elements of the input tensor $x_i$ is performed by the processing engine. The processing engine may perform a first pass over the elements of the input tensor $x_i$, e.g., iterates through the elements of the input tensor $x_i$, to maintain a running maximum value m and a denominator value d based on one or more elements of the input tensor $x_i$.

For each element $x_j$ of the input tensor (for j in range (1,N)), if the element $x_j$ is greater than the maximum value m (if $(x_j > m)$), then the denominator value d is set to be a product of the denominator value d and a base of 2 raised to the power of the maximum value m subtracted by element $x_j$ ($d = d \cdot 2^{m-x_j}$), and the maximum value m is set to be the element $x_j$ ($m = x_j$). If the element $x_j$ is not greater than the maximum value m (if $(x_j > m)$), then the maximum value m is left unchanged. Regardless of whether the element $x_j$ is or is not greater than the maximum value m, for each element $x_j$ of the input tensor (for j in range (1,N)), the denominator value d is updated to be a sum of the denominator value d and a base of 2 raised to the power of the element $x_j$ subtracted by the maximum value m ($d \leftarrow d + 2^{x_j-m}$). By performing this update of the denominator value d as the processor engine iterates through the elements $x_i$ of the input tensor, the denominator value d at the end of the iterations over the elements $x_i$ of the input tensor would be equal to $\sum_{j=1}^{N} 2^{x_i - \max(x_i)}$.

In some embodiments, maintaining the running maximum value m and a denominator value d in 904 comprises determining whether a first element $x_j$ of the input tensor is greater than the running maximum value *m.* Maintaining the running maximum value m and a denominator value d in 904 may further include, in response to determining that the first element $x_j$ of the input tensor is greater than the running maximum value m, determining a product of the denominator value d and a base raised to an exponent. Determining the product of the denominator value d and a base raised to an exponent may include determining $d \cdot 2^{m-x_j}$ seen in 904. The base may be a power of 2, such as 2. The exponent may be the running maximum value m subtracted by the first element $x_j$ of the input tensor. The exponent may correspond to $m - x_j$ seen in 904. Maintaining the running maximum value m and a denominator value d in 904 may further include, in response to determining that the first element $x_j$ of the input tensor is greater than the running maximum value m, updating the running maximum value m based on the first element $x_j$ of the input tensor. Updating the running maximum value may correspond to m = $x_j$ seen in 904.

In some embodiments, maintaining the running maximum value M and a denominator value d in 904 may further include, after the iterations $x_i$ over the elements of the input tensor in 904 are performed, updating the denominator value d based on a sum of the product (e.g., $d \cdot 2^{m-x_j}$) and the base raised to an exponent (e.g., $2^{x_j-m}$). The exponent may be the first element $x_j$ of the input tensor subtracted by the running maximum value m ($x_j - m$). The sum may correspond to $d + 2^{x_j-m}$ of 904. This update of the denominator value d may correspond to $d \leftarrow d + 2^{x_j-m}$, where the denominator value d at the end of the iterations over the elements $x_i$ of the input tensor would be equal to $\sum_{j=1}^{N} 2^{x_i - \max(x_i)}$

In 904, after iterating over the elements of the input tensor $x_i$ to obtain the denominator value d (e.g., $d = \sum_{j=1}^{N} 2^{x_i - \max(x_i)}$) and the running maximum value m (e.g., m = max $(x_j)$), the processing engine updates the denominator value d based on a logarithm of the denominator value d, e.g., ln(d). This update corresponds to $d \leftarrow \ln(d)$ in 904. The logarithm of the denominator value d may be a natural logarithm of the denominator value, or be a logarithm having the natural number *e* as the base. The update of the denominator value d based on the logarithm of the denominator value d calculates the value ln(d) used in equation 6.

In 904, after updating the denominator value d based on the logarithm of the denominator value d, the processing engine determines an operand value c based on a sum of the denominator value d (which has the value ln(d)) and the running maximum value m. The sum may correspond to $d + m$ in 904. This determination corresponds to $c = d + m$ in 904. This determination corresponds to calculating the value c according to equation 6.

Referring back to 704 of FIG. 7 performing a 2-pass version of SoftMax, 704 may cause the processing engine to execute P operations to complete operations in 704. Referring back to 904 of FIG. 9 performing a modified 2-pass version of SoftMax, 904 may cause the processing engine to execute P operations plus a scalar logarithmic operation (e.g., to perform $d \leftarrow \ln(d)$ in 904) and a scalar 2-input addition (e.g., to perform $c = d + m$ in 904) to complete operations in 904. When the modified 2-pass version of SoftMax with approximation is compared against the modified 2-pass version of SoftMax, N exponentials used in 904 to determine $2^{m-x_j}$ may be faster than the N exponentials used in 806 to determine $2^{m-x_j}$.

In 906, a second pass over the elements of the input tensor $x_i$ is performed by the processing engine. The second pass iterates through the elements of the input tensor $x_i$ to determine the values of the output tensor $y_i$. For each element $x_j$ of the input tensor (for j in range (1,N)), the element $x_j$ of the input tensor is updated to be a base of 2 raised to a power of the element $x_j$ subtracted by the operand value c. The power may correspond to $x_j - c$ seen in 906. This update may correspond to $x_j \leftarrow 2^{x_j-c}$ seen in 906. The input tensor $x_i$ with updated values determined in the second pass may be output as the output tensor $y_i$. The values of the output tensor $y_i$ corresponds to $y_i = 2^{x_i-c}$.

In some embodiments, the second pass over the elements of the input tensor $x_i$ involves the processor engine updating at least a first element $x_j$ of the input tensor by raising a base of 2 to an exponent (e.g., $2^{x_j-c}$). The exponent may be the first element $x_j$ of the input tensor subtracted by the operand value c. The exponent may correspond to $x_j - c$ seen in 906. This updating may correspond to $x_j \leftarrow 2^{x_j-c}$ seen in 906. The operations in 906 finally computes an approximation of SoftMax values of the output tensor $y_i = 2^{x_i-c}$.

Referring back to 706 of FIG. 7 performing a 2-pass version of SoftMax, 706 may cause the processing engine to execute N 2-input subtractions (to determine $x_j - m$), N exponentials (to determine $e^{x_j-m}$), and N divisions (to determine $e^{x_j-m}/d$) to complete operations in 706. Referring back to 906 of FIG. 9 performing a modified 2-pass version of SoftMax, 906 may cause the processing engine to execute N 2-input subtractions (to determine $x_j - c$), N exponentials (to determine $2^{x_j-c}$) to complete operations in 906. 906 is absent of divisions. When the modified 2-pass version of SoftMax with approximation is compared against the modified 2-pass version of SoftMax, the N exponentials used in 906 to determine $2^{x_j-c}$ may be faster than the N exponentials used in 806 to determine $e^{x_j-c}$.

Even though 904 adds 2 scalar operations, saving N divisions in 906 means that the computational cost of performing SoftMax operation is dramatically reduced. The SoftMax operation is performed/repeated N times for sequence length N in an attention layer of a transformer-based neural network. This means that the modified 2-pass version of SoftMax saves a quadratic number ($N^2$) of divisions (e.g., FP32 inverse multiplications) and only adds a linear number (N) of scalar operations. The computational savings increase as the sequence length N becomes longer. When the modified 2-pass version of SoftMax with approximation is compared against the modified 2-pass version of SoftMax, the exponentials performed in 904 and 906 may be faster than the exponentials performed in 802 and 806. Minimal loss in accuracy may occur due to the approximation or quantization introduced in 904 and 906. However, fine-tuning can be used, if desired, to reduce the loss in accuracy.

After the instructions are executed by the processing engine, the processing engine may output an output tensor $y_i$ having results of the SoftMax operation. In some cases, the processing engine may output the input tensor $x_i$ (having updated values for its elements) as the output tensor $y_i$. The output tensor $y_i$ comprising the one or more elements of the input tensor $x_i$ converted into one or more probabilities of a probability distribution. One or more values of the one or more elements of the output tensor $y_i$ are within a range from 0 to 1 such that a sum of the one or more values of the one or more elements of the output tensor $y_i$ equals to 1.

In 908, the processing engine may perform a matrix multiplication of the output tensor $y_i = 2^{x_j-c}$ with a matrix V. In an attention layer, the matrix V may correspond to the values matrix. The matrix multiplication performed in 908 may correspond to MatMul operation 208 of FIG. 2, which receives the output from SoftMax operation 206 and determines output O. The values of the output tensor may be expressed as powers of 2, where the power corresponds to the exponent ($x_j - c$). The power or exponent is the first element subtracted by the operand c ($x_j - c$). Performing matrix multiplication in 908 involves performing many dot products, where a dot product includes multiplication of elements $y_j$ and corresponding elements in matrix V, and accumulation of the products. Rather than performing multiplication of elements $y_j$ and elements in matrix V to determine a dot product, 908 may include performing a bit shift of an element in matrix V by a number of positions instead. The bit shift may correspond to $V << ROUND\ [x_j - c]$ seen in 908. The number of positions may correspond to a rounded integer value of the exponent or power, e.g., $x_j - c$. Performing bit shifts instead of floating point multiplication of numbers can be significantly faster, though the approximation may result in some loss in accuracy.

*An exemplary method for compiling a SoftMax operation to be performed by a processing engine*

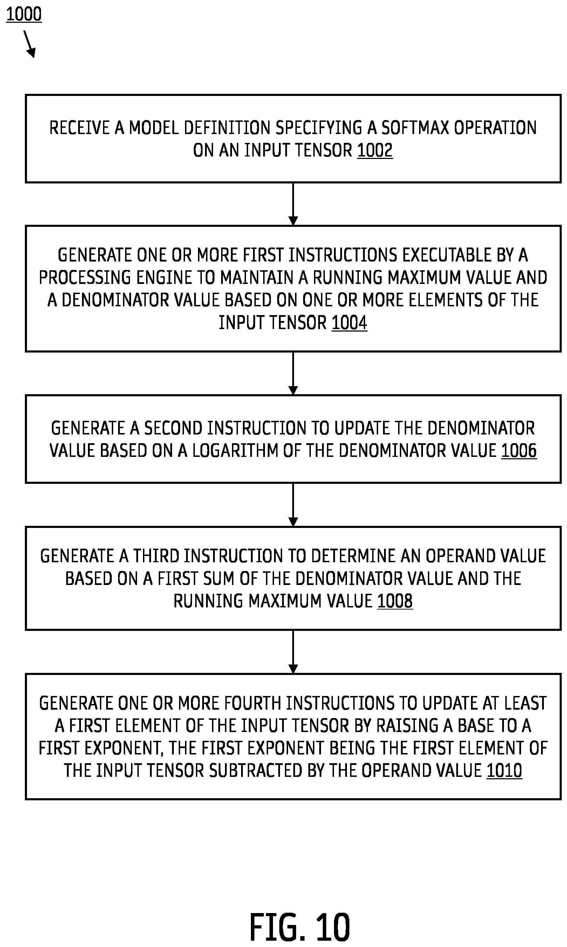

FIG. 10 is a flowchart showing a method for compiling a SoftMax operation to be performed by a processor, according to some embodiments of the disclosure. Method 1000 can be performed using a computing device, such as computing device 1200 in FIG. 12. Method 1000 may be performed using one or more parts illustrated FIGS. 3-5. Method 1000 may be an exemplary method performed by DNN module 301 and/or DNN accelerator 302 as illustrated in FIGS. 3-5.

In 1002, a DNN module may receive a neural network model definition specifying a SoftMax operation being applied to an input tensor.

In 1004, the DNN module may generate one or more first instructions executable by a processing engine to maintain a running maximum value and a denominator value based on one or more elements of the input tensor.

In 1006, the DNN module may generate a second instruction executable by the processing engine to update the denominator value based on a logarithm of the denominator value.

In 1008, the DNN module may generate a third instruction executable by the processing engine to determine an operand value based on a first sum of the denominator value and the running maximum value.

In 1010, the DNN module may generate one or more fourth instructions executable by the processing engine to update at least a first element of the input tensor by raising a base to a first exponent, the first exponent being the first element of the input tensor subtracted by the operand value.

The one or more first instructions, the second instruction, the third instruction, and one or more fourth instructions cause the processing engine to perform the SoftMax operation on the input tensor.

In some embodiments, the SoftMax operation on the input tensor converts one or more elements of the input tensor into one or more values within a range from 0 to 1 such that a second sum of the one or more values of the input tensor equals to 1.

In some embodiments, the one or more first instructions can maintain the running maximum value and the denominator value by determining whether the first element of the input tensor is greater than the running maximum value. The one or more first instructions can maintain the instructions maintain the running maximum value and the denominator value further by, in response to determining that the first element of the input tensor is greater than the running maximum value: determining a product of the denominator value and the base raised to a second exponent, the second exponent being the running maximum value subtracted by the first element of the input tensor, and updating the running maximum value based on the first element of the input tensor. The one or more first instructions can maintain the running maximum value and the denominator value further by updating the denominator value based on a third sum of the product and the base raised to a third exponent, the third exponent being the first element of the input tensor subtracted by the running maximum value.

In some embodiments, the logarithm of the denominator value is a natural logarithm of the denominator value.

In some embodiments, the base is a natural number e. In some alternative embodiments, the base is a power of 2, such as 2.

In some embodiments, the neural network model definition further specifies a matrix multiplication operation on an output tensor of the SoftMax operation and a matrix. The method 1000 may further include generating one or more fifth instructions executable by the processing engine to perform a bit shift by a number of positions, the number of positions being a rounded integer value of the first exponent.

*An exemplary method for performing a SoftMax operation by a processing engine*

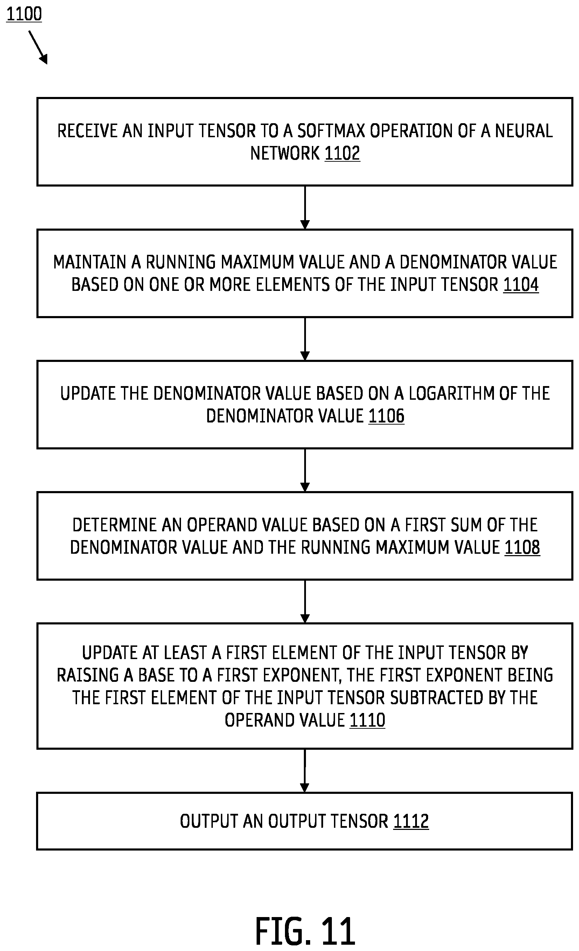

FIG. 11 is a flowchart showing a method for executing a SoftMax operation to be performed by a processor, according to some embodiments of the disclosure. Method 1000 can be performed using a computing device, such as computing device 1200 in FIG. 12. Method 1000 may be performed using one or more parts illustrated FIGS. 3-5. Method 1000 may be an exemplary method performed by DNN module 301 and/or DNN accelerator 302 as illustrated in FIGS. 3-5.

In 1102, a processing engine (e.g., a processing engine of DNN accelerator 302) may receive an input tensor to a SoftMax operation of a neural network.

In 1104, the processing engine may maintain a running maximum value and a denominator value based on one or more elements of the input tensor.

In 1106, the processing engine may update the denominator value based on a logarithm of the denominator value.

In 1108, the processing engine may determine an operand value based on a first sum of the denominator value and the running maximum value.

In 1110, the processing engine may update at least a first element of the input tensor by raising a base to a first exponent, the first exponent being the first element of the input tensor subtracted by the operand value.

In 1112, the processing engine may output an output tensor. The output tensor can include the one or more elements of the input tensor converted into one or more probabilities of a probability distribution.

In some embodiments, one or more values of the one or more elements of the output tensor are within a range from 0 to 1 such that a second sum of the one or more values of the one or more elements of the output tensor equals to 1.

In some embodiments, maintaining the running maximum value and the denominator value can include determining whether the first element of the input tensor is greater than the running maximum value. In some embodiments, maintaining the running maximum value and the denominator value can further include, in response to determining that the first element of the input tensor is greater than the running maximum value: determining a product of the denominator value and the base raised to a second exponent, the second exponent being the running maximum value subtracted by the first element of the input tensor, and updating the running maximum value based on the first element of the input tensor. In some embodiments, maintaining the running maximum value and the denominator value can further include updating the denominator value based on a third sum of the product and the base raised to a third exponent, the third exponent being the first element of the input tensor subtracted by the running maximum value.

In some embodiments, the logarithm of the denominator value is a natural logarithm of the denominator value.

In some embodiments, the base is a natural number e. In some alternative embodiments, the base is a power of 2, such as 2.

In some embodiments, the neural network further includes a matrix multiplication operation on the output tensor and a matrix. The method 1100 may further include the processing engine performing a bit shift by a number of positions, the number of positions being a rounded integer value of the first exponent.

*Exemplary computing device*

FIG. 12 is a block diagram of an apparatus or a system, e.g., an exemplary computing device 1200, according to some embodiments of the disclosure. One or more computing devices 1200 may be used to implement the functionalities described with the FIGS. and herein. A number of components illustrated in the FIGS. can be included in the computing device 1200, but any one or more of these components may be omitted or duplicated, as suitable for the application. In some embodiments, some or all of the components included in the computing device 1200 may be attached to one or more motherboards. In some embodiments, some or all of these components are fabricated onto a single system on a chip (SoC) die. Additionally, in various embodiments, the computing device 1200 may not include one or more of the components illustrated in FIG. 12, and the computing device 1200 may include interface circuitry for coupling to the one or more components. For example, the computing device 1200 may not include a display device 1206, and may include display device interface circuitry (e.g., a connector and driver circuitry) to which a display device 1206 may be coupled. In another set of examples, the computing device 1200 may not include an audio input device 1218 or an audio output device 1208 and may include audio input or output device interface circuitry (e.g., connectors and supporting circuitry) to which an audio input device 1218 or audio output device 1208 may be coupled.

The computing device 1200 may include a processing device 1202 (e.g., one or more processing devices, one or more of the same types of processing device, one or more of different types of processing device). The processing device 1202 may include electronic circuitry that process electronic data from data storage elements (e.g., registers, memory, resistors, capacitors, quantum bit cells) to transform that electronic data into other electronic data that may be stored in registers and/or memory. Examples of processing device 1202 may include a CPU, a graphical processing unit (GPU), a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1200 may include a memory 1204, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1204 includes one or more non-transitory computer-readable storage media. In some embodiments, memory 1204 may include memory that shares a die with the processing device 1202.

In some embodiments, memory 1204 includes one or more non-transitory computer-readable media storing instructions executable to perform operations described with the FIGS. and herein, such as the methods and operations illustrated in FIGS. 8-11. In some embodiments, memory 1204 includes one or more non-transitory computer-readable media storing instructions executable to perform operations of method 1000 of FIG. 10 and method 1100 OF FIG. 11. Exemplary parts that may be encoded as instructions and stored in memory 1204 are depicted. Memory 1204 may store instructions that encode one or more exemplary parts, such as DNN module 301 or one or more parts of DNN module 301. The instructions stored in the one or more non-transitory computer-readable media may be executed by processing device 1202.

In some embodiments, memory 1204 may store data, e.g., data structures, binary data, bits, metadata, files, blobs, etc., as described with the FIGS. and herein. Exemplary data that may be stored in memory 1204 are depicted.

In some embodiments, memory 1204 may store one or more DNNs (and or parts thereof). Memory 1204 may store training data for training (trained) a DNN. Memory 1204 may store instructions that perform operations associated with training a DNN. Memory 1204 may store input data, output data, intermediate outputs, intermediate inputs of one or more DNNs. Memory 1204 may store one or more parameters used by the one or more DNNs. Memory 1204 may store information that encodes how nodes of the one or more DNNs are connected with each other. Memory 1204 may store instructions to perform one or more operations of the one or more DNNs. Memory 1204 may store a model definition that specifies one or more operations of a DNN. Memory 1204 may store instructions, such as configuration files, that are generated by a compiler based on the model definition.

In some embodiments, the computing device 1200 may include a communication device 1212 (e.g., one or more communication devices). For example, the communication device 1212 may be configured for managing wired and/or wireless communications for the transfer of data to and from the computing device 1200. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1212 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1212 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1212 may operate in accordance with other wireless protocols in other embodiments. The computing device 1200 may include an antenna 1222 to facilitate wireless communications and/or to receive other wireless communications (such as radio frequency transmissions). The computing device 1200 may include receiver circuits and/or transmitter circuits. In some embodiments, the communication device 1212 may manage wired communications, such as electrical, optical, or any other suitable communication protocols (e.g., the Ethernet). As noted above, the communication device 1212 may include multiple communication chips. For instance, a first communication device 1212 may be dedicated to shorter-range wireless communications such as Wi-Fi or Bluetooth, and a second communication device 1212 may be dedicated to longer-range wireless communications such as global positioning system (GPS), EDGE, GPRS, CDMA, WiMAX, LTE, EV-DO, or others. In some embodiments, a first communication device 1212 may be dedicated to wireless communications, and a second communication device 1212 may be dedicated to wired communications.

The computing device 1200 may include power source / power circuitry 1214. The power source / power circuitry 1214 may include one or more energy storage devices (e.g., batteries or capacitors) and/or circuitry for coupling components of the computing device 1200 to an energy source separate from the computing device 1200 (e.g., DC power, AC power, etc.).

The computing device 1200 may include a display device 1206 (or corresponding interface circuitry, as discussed above). The display device 1206 may include any visual indicators, such as a heads-up display, a computer monitor, a projector, a touchscreen display, a liquid crystal display (LCD), a light-emitting diode display, or a flat panel display, for example.

The computing device 1200 may include an audio output device 1208 (or corresponding interface circuitry, as discussed above). The audio output device 1208 may include any device that generates an audible indicator, such as speakers, headsets, or earbuds, for example.

The computing device 1200 may include an audio input device 1218 (or corresponding interface circuitry, as discussed above). The audio input device 1218 may include any device that generates a signal representative of a sound, such as microphones, microphone arrays, or digital instruments (e.g., instruments having a musical instrument digital interface (MIDI) output).

The computing device 1200 may include a GPS device 1216 (or corresponding interface circuitry, as discussed above). The GPS device 1216 may be in communication with a satellite-based system and may receive a location of the computing device 1200, as known in the art.

The computing device 1200 may include a sensor 1230 (or one or more sensors). The computing device 1200 may include corresponding interface circuitry, as discussed above). Sensor 1230 may sense physical phenomenon and translate the physical phenomenon into electrical signals that can be processed by, e.g., processing device 1202. Examples of sensor 1230 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1200 may include another output device 1210 (or corresponding interface circuitry, as discussed above). Examples of the other output device 1210 may include an audio codec, a video codec, a printer, a wired or wireless transmitter for providing information to other devices, haptic output device, gas output device, vibrational output device, lighting output device, home automation controller, or an additional storage device.

The computing device 1200 may include another input device 1220 (or corresponding interface circuitry, as discussed above). Examples of the other input device 1220 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1200 may have any desired form factor, such as a handheld or mobile computer system (e.g., a cell phone, a smart phone, a mobile internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1200 may be any other electronic device that processes data.

*Select examples*

Example 1 includes a method, comprising: receiving a neural network model definition specifying a SoftMax operation being applied to an input tensor; generating one or more first instructions executable by a processing engine to maintain a running maximum value and a denominator value based on one or more elements of the input tensor; generating a second instruction executable by the processing engine to update the denominator value based on a logarithm of the denominator value; generating a third instruction executable by the processing engine to determine an operand value based on a first sum of the denominator value and the running maximum value; and generating one or more fourth instructions executable by the processing engine to update at least a first element of the input tensor by raising a base to a first exponent, the first exponent being the first element of the input tensor subtracted by the operand value; wherein the one or more first instructions, the second instruction, the third instruction, and the one or more fourth instructions cause the processing engine to perform the SoftMax operation on the input tensor.

In Example 2, the method of Example 1 can optionally include the SoftMax operation on the input tensor converting one or more elements of the input tensor into one or more values within a range from 0 to 1 such that a second sum of the one or more values of the input tensor equals to 1.

In Example 3, the method of Example 1 or 2 can optionally include the one or more first instructions maintaining the running maximum value and the denominator value by: determining whether the first element of the input tensor is greater than the running maximum value.

In Example 4, the method of Example 3 can optionally include the one or more first instructions maintaining the running maximum value and the denominator value further by: in response to determining that the first element of the input tensor is greater than the running maximum value: determining a product of the denominator value and the base raised to a second exponent, the second exponent being the running maximum value subtracted by the first element of the input tensor; and updating the running maximum value based on the first element of the input tensor.

In Example 5, the method of Example 4 can optionally include the one or more first instructions maintaining the running maximum value and the denominator value further by: updating the denominator value based on a third sum of the product and the base raised to a third exponent, the third exponent being the first element of the input tensor subtracted by the running maximum value.

In Example 6, the method of any one of Examples 1-5 can optionally include the logarithm of the denominator value being a natural logarithm of the denominator value.

In Example 7, the method of any one of Examples 1-6 can optionally include the base being a natural number e.

In Example 8, the method of any one of Examples 1-6 can optionally include the base being a power of 2.

In Example 9, the method of Example 8 can optionally include: the neural network model definition further specifying a matrix multiplication operation on an output tensor of the SoftMax operation and a matrix; and the method further comprising: generating one or more fifth instructions executable by the processing engine to perform a bit shift by a number of positions, the number of positions being a rounded integer value of the first exponent.

In Example 10, the method of any one of Examples 1-9 can optionally include: the SoftMax operation being in an attention layer in the neural network model definition.

In Example 11, the method of any one of Examples 1-10, can optionally include: the SoftMax operation following a scale operation in the neural network model definition.

Example 12 includes a method, comprising: receiving, by a processing engine, an input tensor to a SoftMax operation of a neural network; maintaining, by the processing engine, a running maximum value and a denominator value based on one or more elements of the input tensor; updating, by the processing engine, the denominator value based on a logarithm of the denominator value; determining, by the processing engine, an operand value based on a first sum of the denominator value and the running maximum value; updating, by the processing engine, at least a first element of the input tensor by raising a base to a first exponent, the first exponent being the first element of the input tensor subtracted by the operand value; and outputting, by the processing engine, an output tensor comprising the one or more elements of the input tensor converted into one or more probabilities of a probability distribution.

In Example 13, the method of Example 12 can optionally include one or more values of the one or more elements of the output tensor being within a range from 0 to 1 such that a second sum of the one or more values of the one or more elements of the output tensor equals to 1.

In Example 14, the method of Example 12 or 13 can optionally include maintaining the running maximum value and the denominator value comprises: determining whether the first element of the input tensor is greater than the running maximum value.

In Example 15, the method of Example 14 can optionally include maintaining the running maximum value and the denominator value further comprising: in response to determining that the first element of the input tensor is greater than the running maximum value: determining a product of the denominator value and the base raised to a second exponent, the second exponent being the running maximum value subtracted by the first element of the input tensor; and updating the running maximum value based on the first element of the input tensor.

In Example 16, the method of Example 15 can optionally include maintaining the running maximum value and the denominator value further comprising: updating the denominator value based on a third sum of the product and the base raised to a third exponent, the third exponent being the first element of the input tensor subtracted by the running maximum value.

In Example 17. The method of any one of Examples 12-16, wherein the logarithm of the denominator value is a natural logarithm of the denominator value.

In Example 18. The method of any one of Examples 12-17, wherein the base is a natural number e.

In Example 19. The method of any one of Examples 12-17, wherein the base is a power of 2.

In Example 20. The method of Example 19, wherein: the neural network further includes a matrix multiplication operation on the output tensor and a matrix; and the method further comprises: performing a bit shift by a number of positions, the number of positions being a rounded integer value of the first exponent.

In Example 21. The method of any one of Examples 12-20, wherein: the SoftMax operation is in an attention layer in the neural network.

In Example 22. The method of any one of Examples 12-21, wherein: the SoftMax operation follows a scale operation in the neural network.

Example 23. One or more non-transitory computer-readable media storing instructions that, when executed by one or more processors, cause the one or more processors to: receive a neural network model definition specifying a SoftMax operation being applied to an input tensor; generate one or more first instructions executable by a processing engine to maintain a running maximum value and a denominator value based on one or more elements of the input tensor; generate a second instruction executable by the processing engine to update the denominator value based on a logarithm of the denominator value; generate a third instruction executable by the processing engine to determine an operand value based on a first sum of the denominator value and the running maximum value; and generate one or more fourth instructions executable by the processing engine to update at least a first element of the input tensor by raising a base to a first exponent, the first exponent being the first element of the input tensor subtracted by the operand value; wherein the one or more first instructions, the second instruction, the third instruction, and the one or more fourth instructions cause the processing engine to perform the SoftMax operation on the input tensor.

In Example 24, the one or more non-transitory computer-readable media of Example 23 can optionally include the SoftMax operation on the input tensor converting one or more elements of the input tensor into one or more values within a range from 0 to 1 such that a second sum of the one or more values of the input tensor equals to 1.

In Example 25, the one or more non-transitory computer-readable media of Example 23 or 24 can optionally include the one or more first instructions maintaining the running maximum value and the denominator value by: determining whether the first element of the input tensor is greater than the running maximum value.

In Example 26, the one or more non-transitory computer-readable media of Example 25 can optionally include the one or more first instructions maintaining the running maximum value and the denominator value further by: in response to determining that the first element of the input tensor is greater than the running maximum value: determining a product of the denominator value and the base raised to a second exponent, the second exponent being the running maximum value subtracted by the first element of the input tensor; and updating the running maximum value based on the first element of the input tensor.

In Example 27, the one or more non-transitory computer-readable media of Example 26 can optionally include the one or more first instructions maintaining the running maximum value and the denominator value further by: updating the denominator value based on a third sum of the product and the base raised to a third exponent, the third exponent being the first element of the input tensor subtracted by the running maximum value.

In Example 28, the one or more non-transitory computer-readable media of any one of Examples 23-27 can optionally include the logarithm of the denominator value being a natural logarithm of the denominator value.

In Example 29, the one or more non-transitory computer-readable media of any one of Examples 23-28 can optionally include the base being a natural number e.

In Example 30. The one or more non-transitory computer-readable media of any one of Examples 23-28 can optionally include the base being a power of 2.

In Example 31, the one or more non-transitory computer-readable media of Example 30 can optionally include: the neural network model definition further specifying a matrix multiplication operation on an output tensor of the SoftMax operation and a matrix; and the instructions further causing the one or more processors to: generate one or more fifth instructions executable by the processing engine to perform a bit shift by a number of positions, the number of positions being a rounded integer value of the first exponent.

In Example 32, the one or more non-transitory computer-readable media of any one of Examples 23-31 can optionally include: the SoftMax operation being in an attention layer in the neural network model definition.

In Example 33, the one or more non-transitory computer-readable media of any one of Examples 23-32 can optionally include: the SoftMax operation following a scale operation in the neural network model definition.

Example 34 includes one or more non-transitory computer-readable media storing instructions that, when executed by one or more processing engines, cause the one or more processing engines to: receive an input tensor to a SoftMax operation of a neural network; maintain a running maximum value and a denominator value based on one or more elements of the input tensor; update the denominator value based on a logarithm of the denominator value; determine an operand value based on a first sum of the denominator value and the running maximum value; update at least a first element of the input tensor by raising a base to a first exponent, the first exponent being the first element of the input tensor subtracted by the operand value; and output an output tensor comprising the one or more elements of the input tensor converted into one or more probabilities of a probability distribution.

In Example 35, the one or more non-transitory computer-readable media of Example 34 can optionally include one or more values of the one or more elements of the output tensor being within a range from 0 to 1 such that a second sum of the one or more values of the one or more elements of the output tensor equals to 1.

In Example 36, the one or more non-transitory computer-readable media of Example 34 or 35 can optionally include maintaining the running maximum value and the denominator value comprising: determining whether the first element of the input tensor is greater than the running maximum value.

In Example 37, the one or more non-transitory computer-readable media of Example 36 can optionally include maintaining the running maximum value and the denominator value further comprising: in response to determining that the first element of the input tensor is greater than the running maximum value: determining a product of the denominator value and the base raised to a second exponent, the second exponent being the running maximum value subtracted by the first element of the input tensor; and updating the running maximum value based on the first element of the input tensor.

In Example 38, the one or more non-transitory computer-readable media of Example 37 can optionally include maintaining the running maximum value and the denominator value further comprising: updating the denominator value based on a third sum of the product and the base raised to a third exponent, the third exponent being the first element of the input tensor subtracted by the running maximum value.

In Example 39, the one or more non-transitory computer-readable media of any one of Examples 34-38 can optionally include the logarithm of the denominator value being a natural logarithm of the denominator value.

In Example 40, the one or more non-transitory computer-readable media of any one of Examples 34-39 can optionally include the base being a natural number e.

In Example 41, the one or more non-transitory computer-readable media of any one of Examples 34-39 can optionally include the base being a power of 2.

In Example 42, the one or more non-transitory computer-readable media of Example 41 can optionally include: the neural network further including a matrix multiplication operation on the output tensor and a matrix; and the instructions further causing the one or more processing engines to: perform a bit shift by a number of positions, the number of positions being a rounded integer value of the first exponent.

In Example 43, the one or more non-transitory computer-readable media of any one of Examples 34-42 can optionally include: the SoftMax operation being in an attention layer in the neural network.

In Example 44, the one or more non-transitory computer-readable media of any one of Examples 34-43 can optionally include the SoftMax operation following a scale operation in the neural network.

Example 45 includes a system, comprising: one or more processors; and one or more non-transitory computer-readable memories to store instructions, wherein the instructions, when executed by the one or more processors, cause the one or more processors to: receive a neural network model definition specifying a SoftMax operation being applied to an input tensor; generate one or more first instructions executable by a processing engine to maintain a running maximum value and a denominator value based on one or more elements of the input tensor; generating a second instruction executable by the processing engine to update the denominator value based on a logarithm of the denominator value; generate a third instruction executable by the processing engine to determine an operand value based on a first sum of the denominator value and the running maximum value; and generate one or more fourth instructions executable by the processing engine to update at least a first element of the input tensor by raising a base to a first exponent, the first exponent being the first element of the input tensor subtracted by the operand value; wherein the one or more first instructions, the second instruction, the third instruction, and the one or more fourth instructions cause the processing engine to perform the SoftMax operation on the input tensor.

In Example 46, the system of Example 45 can optionally include the SoftMax operation on the input tensor converting one or more elements of the input tensor into one or more values within a range from 0 to 1 such that a second sum of the one or more values of the input tensor equals to 1.

In Example 47, the system of Example 45 or 46 can optionally include the one or more first instructions maintaining the running maximum value and the denominator value by: determining whether the first element of the input tensor is greater than the running maximum value.

In Example 48, the system of Example 47 can optionally include the one or more first instructions maintaining the running maximum value and the denominator value further by: in response to determining that the first element of the input tensor is greater than the running maximum value: determining a product of the denominator value and the base raised to a second exponent, the second exponent being the running maximum value subtracted by the first element of the input tensor; and updating the running maximum value based on the first element of the input tensor.

In Example 49, the system of Example 48 can optionally include the one or more first instructions maintaining the running maximum value and the denominator value further by: updating the denominator value based on a third sum of the product and the base raised to a third exponent, the third exponent being the first element of the input tensor subtracted by the running maximum value.

In Example 50, the system of any one of Examples 45-49 can optionally include the logarithm of the denominator value being a natural logarithm of the denominator value.

In Example 51, the system of any one of Examples 45-50 can optionally include the base being a natural number e.

In Example 52, the system of any one of Examples 45-50, the base being a power of 2.

In Example 53, the system of Example 52 can optionally include: the neural network model definition further specifying a matrix multiplication operation on an output tensor of the SoftMax operation and a matrix; and the instructions further causing the one or more processors to: generate one or more fifth instructions executable by the processing engine to perform a bit shift by a number of positions, the number of positions being a rounded integer value of the first exponent.

In Example 54, the system of any one of Examples 45-53 can optionally include: the SoftMax operation being in an attention layer in the neural network model definition.

In Example 55, the system of any one of Examples 45-54 can optionally include: the SoftMax operation following a scale operation in the neural network model definition.

Example 56 includes a system, comprising: one or more processing engines; and one or more non-transitory computer-readable memories to store instructions, wherein the instructions, when executed by the one or more processing engines, cause the one or more processing engines to: receive an input tensor to a SoftMax operation of a neural network; maintain a running maximum value and a denominator value based on one or more elements of the input tensor; update the denominator value based on a logarithm of the denominator value; determine an operand value based on a first sum of the denominator value and the running maximum value; update at least a first element of the input tensor by raising a base to a first exponent, the first exponent being the first element of the input tensor subtracted by the operand value; and output an output tensor comprising the one or more elements of the input tensor converted into one or more probabilities of a probability distribution.

In Example 57, the system of Example 56 can optionally include one or more values of the one or more elements of the output tensor being within a range from 0 to 1 such that a second sum of the one or more values of the one or more elements of the output tensor equals to 1.

In Example 58, the system of Example 56 or 57 can optionally include maintaining the running maximum value and the denominator value comprising: determining whether the first element of the input tensor is greater than the running maximum value.

In Example 59, the system of Example 58 can optionally include maintaining the running maximum value and the denominator value further comprising: in response to determining that the first element of the input tensor is greater than the running maximum value: determining a product of the denominator value and the base raised to a second exponent, the second exponent being the running maximum value subtracted by the first element of the input tensor; and updating the running maximum value based on the first element of the input tensor.

In Example 60, the system of Example 59 can optionally include maintaining the running maximum value and the denominator value further comprising: updating the denominator value based on a third sum of the product and the base raised to a third exponent, the third exponent being the first element of the input tensor subtracted by the running maximum value.

In Example 61, the system of any one of Examples 56-60 can optionally include the logarithm of the denominator value being a natural logarithm of the denominator value.

In Example 62, the system of any one of Examples 56-61 can optionally include the base being a natural number e.

In Example 63, the system of any one of Examples 56-61 can optionally include the base being a power of 2.

In Example 64, the system of Example 63 can optionally include: the neural network further including a matrix multiplication operation on the output tensor and a matrix; and the instructions further causing the one or more processing engines to: perform a bit shift by a number of positions, the number of positions being a rounded integer value of the first exponent.

In Example 65, the system of any one of Examples 56-64 can optionally include: the SoftMax operation being in an attention layer in the neural network.

In Example 66, the system of any one of Examples 56-65 can optionally include: the SoftMax operation following a scale operation in the neural network.

Example A is an apparatus comprising means for carrying out any one of the methods according to Examples 1-22.

Example B includes a DNN module as described and illustrated herein.

Example C includes a DNN module to carry out any one of the methods according to Examples 1-11.

Example D includes a compiler as described and illustrated herein.

Example E includes a compiler to carry out any one of the methods according to Examples 1-11.

Example F includes a DNN accelerator as described and illustrated herein.

Example G includes a DNN accelerator to carry out any one of the methods according to Examples 12-22.

Example H includes one or more data processing units to carry out any one of the methods according to Examples 12-22.

Example I includes one or more processing engines to carry out any one of the methods according to Examples 12-22.

Example J includes a DNN system comprising a DNN module and a DNN accelerator as described and illustrated herein.

Example K includes a DNN system comprising a DNN module according to Example C and a DNN accelerator according to Example G.

_Variations and other notes_

Although the operations of the example method shown in and described with reference to FIGS. 8-11 are illustrated as occurring once each and in a particular order, it will be recognized that the operations may be performed in any suitable order and repeated as desired. Additionally, one or more operations may be performed in parallel. Furthermore, the operations illustrated in FIGS. 8-11 may be combined or may include more or fewer details than described.

The various implementations described herein may refer to artificial intelligence, machine learning, and deep learning. Deep learning may be a subset of machine learning. Machine learning may be a subset of artificial intelligence. In cases where a deep learning model is mentioned, if suitable for a particular application, a machine learning model may be used instead. In cases where a deep learning model is mentioned, if suitable for a particular application, a digital signal processing system may be used instead.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. A method, comprising:

   receiving, by a processing engine, an input tensor to a SoftMax operation of a neural network;
   maintaining, by the processing engine, a running maximum value and a denominator value based on one or more elements of the input tensor;
   updating, by the processing engine, the denominator value based on a logarithm of the denominator value;
   determining, by the processing engine, an operand value based on a first sum of the denominator value and the running maximum value;
   updating, by the processing engine, at least a first element of the input tensor by raising a base to a first exponent, the first exponent being the first element of the input tensor subtracted by the operand value; and
   outputting, by the processing engine, an output tensor comprising the one or more elements of the input tensor converted into one or more probabilities of a probability distribution.

2. The method of claim 1, wherein one or more values of the one or more elements of the output tensor are within a range from 0 to 1 such that a second sum of the one or more values of the one or more elements of the output tensor equals to 1.

3. The method of claim 1 or 2, wherein maintaining the running maximum value and the denominator value comprises: determining whether the first element of the input tensor is greater than the running maximum value.

4. The method of claim 3, wherein maintaining the running maximum value and the denominator value further comprises:
in response to determining that the first element of the input tensor is greater than the running maximum value:

determining a product of the denominator value and the base raised to a second exponent, the second exponent being the running maximum value subtracted by the first element of the input tensor; and
updating the running maximum value based on the first element of the input tensor.

5. The method of claim 4, wherein maintaining the running maximum value and the denominator value further comprises:
updating the denominator value based on a third sum of the product and the base raised to a third exponent, the third exponent being the first element of the input tensor subtracted by the running maximum value.

6. The method of any one of claims 1-5, wherein the logarithm of the denominator value is a natural logarithm of the denominator value.

7. The method of any one of claims 1-6, wherein the base is a natural number e.

8. The method of any one of claims 1-6, wherein the base is a power of 2.

9. The method of claim 8, wherein:

the neural network further includes a matrix multiplication operation on the output tensor and a matrix; and
the method further comprises:
performing a bit shift by a number of positions, the number of positions being a rounded integer value of the first exponent.

10. The method of any one of claims 1-9, wherein:
the SoftMax operation is in an attention layer in the neural network.

11. The method of any one of claims 1-10, wherein:
the SoftMax operation follows a scale operation in the neural network.

12. One or more non-transitory computer-readable media storing instructions that, when executed by one or more processing engines, cause the one or more processing engines to perform a method according to any one of claims 1-11.

13. A system, comprising:

one or more processing engines; and
one or more non-transitory computer-readable memories to store instructions, wherein the instructions, when executed by the one or more processing engines, cause the one or more processing engines to perform a method according to any one of claims 1-11.

14. An apparatus comprising means for performing a method according to any one of claims 1-11.

FIG. 1

$$O = f(Q, K, V) = \sigma\left(\frac{QK^T}{\sqrt{d_k}}\right)V$$

FIG. 2

DNN SYSTEM <u>300</u>

DNN ACCELERATOR
<u>302</u>

MEMORY
<u>310</u>

DMA ENGINE
<u>320</u>

DATA PROCESSING UNIT <u>330</u>

LOCAL MEMORY
<u>340</u>

PROCESSING
ENGINE <u>370</u>

LOAD MODULE
<u>360</u>

DRAIN MODULE
<u>390</u>

POST-
PROCESSING
ENGINE <u>380</u>

DNN MODULE
<u>301</u>

FIG. 3

DNN MODULE 301

TRAINING MODULE
420

INTERFACE MODULE
410

VALIDATING MODULE
440

COMPILER
450

DATASTORE
460

# FIG. 4

FIG. 5

602

INITIALIZE:
m ← -inf
d ← 0

604

PASS 1: CALCULATE MAX
for j in range(1,N):
    if $(x_j > m)$: m = $x_j$

606

PASS 2: CALCULATE DENOMINATOR
for j in range(1,N):
    $d \leftarrow d + e^{x_j - m}$

608

PASS 3: CALCULATE SOFTMAX
for j in range(1,N):
    $x_j \leftarrow e^{x_j - m}/d$

# FIG. 6

702

INITIALIZE:
m ← -inf
d ← 0

704

P operations

PASS 1: CALCULATE RUNNING MAX AND UPDATE
DENOMINATOR
for j in range(1,N):
$\quad$ if $(x_j > m)$: $d = d.e^{m-x_j}, \mathrm{m} = x_j$
$\quad d \leftarrow d + e^{x_j - m}$

706

N subtractions
N exponentials
N divisions

PASS 2: CALCULATE SOFTMAX
for j in range(1,N):
$\quad x_j \leftarrow e^{x_j - m}/d$

# FIG. 7

802

INITIALIZE:
m ← -inf
d ← 0

P operations
+scalar Ln operation
+scalar addition

804

PASS 1: CALCULATE RUNNING MAX, UPDATE
DENOMINATOR, DETERMINE c=max+ln(d)
for j in range(1,N):
$\qquad$ if $(x_j > m)$: $d = d \cdot e^{m-x_j}$, m $= x_j$
$\qquad\quad d \leftarrow d + e^{x_j-m}$
$d \leftarrow \ln(d)$
$c = d + m$

N subtractions
N exponentials
~~N divisions~~

806

PASS 2: CALCULATE SOFTMAX
for j in range(1,N):
$\qquad x_j \leftarrow e^{x_j-c}$

# FIG. 8

902

INITIALIZE:
m ← -inf
d ← 0

904

P operations
+scalar Ln operation
+scalar addition

PASS 1: CALCULATE RUNNING MAX, UPDATE DENOMINATOR,
DETERMINE c=max+ln(d)
for j in range(1,N):
$\quad$ if $(x_j > m)$: $d = d \cdot 2^{m-x_j}$, m = $x_j$
$\quad d \leftarrow d + 2^{x_j - m}$
$d \leftarrow \ln(d)$
$c \leftarrow d + m$

906

N subtractions
N exponentials
~~N divisions~~

PASS 2: CALCULATE SOFTMAX
for j in range(1,N):
$\quad x_j \leftarrow 2^{x_j - c}$

908

CALCULATE OUTPUT O
$O \leftarrow x_j . V$
$\quad = 2^{x_j - c} . V$
$\quad = V << ROUND[x_j - c]$ (BITSHIFT AND ADD)

# FIG. 9

1000

RECEIVE A MODEL DEFINITION SPECIFYING A SOFTMAX OPERATION ON AN INPUT TENSOR 1002

GENERATE ONE OR MORE FIRST INSTRUCTIONS EXECUTABLE BY A PROCESSING ENGINE TO MAINTAIN A RUNNING MAXIMUM VALUE AND A DENOMINATOR VALUE BASED ON ONE OR MORE ELEMENTS OF THE INPUT TENSOR 1004

GENERATE A SECOND INSTRUCTION TO UPDATE THE DENOMINATOR VALUE BASED ON A LOGARITHM OF THE DENOMINATOR VALUE 1006

GENERATE A THIRD INSTRUCTION TO DETERMINE AN OPERAND VALUE BASED ON A FIRST SUM OF THE DENOMINATOR VALUE AND THE RUNNING MAXIMUM VALUE 1008

GENERATE ONE OR MORE FOURTH INSTRUCTIONS TO UPDATE AT LEAST A FIRST ELEMENT OF THE INPUT TENSOR BY RAISING A BASE TO A FIRST EXPONENT, THE FIRST EXPONENT BEING THE FIRST ELEMENT OF THE INPUT TENSOR SUBTRACTED BY THE OPERAND VALUE 1010

# FIG. 10

1100

RECEIVE AN INPUT TENSOR TO A SOFTMAX OPERATION OF A NEURAL NETWORK 1102

MAINTAIN A RUNNING MAXIMUM VALUE AND A DENOMINATOR VALUE BASED ON ONE OR MORE ELEMENTS OF THE INPUT TENSOR 1104

UPDATE THE DENOMINATOR VALUE BASED ON A LOGARITHM OF THE DENOMINATOR VALUE 1106

DETERMINE AN OPERAND VALUE BASED ON A FIRST SUM OF THE DENOMINATOR VALUE AND THE RUNNING MAXIMUM VALUE 1108

UPDATE AT LEAST A FIRST ELEMENT OF THE INPUT TENSOR BY RAISING A BASE TO A FIRST EXPONENT, THE FIRST EXPONENT BEING THE FIRST ELEMENT OF THE INPUT TENSOR SUBTRACTED BY THE OPERAND VALUE 1110

OUTPUT AN OUTPUT TENSOR 1112

FIG. 11

COMPUTING DEVICE 1200

MEMORY 1204

DNN MODULE 301

1000

1100

PROCESSING DEVICE
1202

ANTENNA 1222

COMMUNICATION DEVICE
1212

DISPLAY DEVICE
1206

GPS DEVICE
1216

POWER
SOURCE /
POWER
CIRCUITRY
1214

AUDIO OUTPUT DEVICE
1208

AUDIO INPUT DEVICE
1218

OTHER OUTPUT DEVICE
1210

OTHER INPUT DEVICE
1220

SENSOR
1230

FIG. 12

Europäisches
Patentamt
European
Patent Office
Office européen
des brevets

# EUROPEAN SEARCH REPORT

**Application Number**

EP 25 17 3367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUKHAN MARAT ET AL: "Two-Pass Softmax Algorithm", 2020 IEEE INTERNATIONAL PARALLEL AND DISTRIBUTED PROCESSING SYMPOSIUM WORKSHOPS (IPDPSW), IEEE, 18 May 2020 (2020-05-18), pages 386-395, XP033799403, DOI: 10.1109/IPDPSW50202.2020.00074 [retrieved on 2020-07-27] * the whole document * ----- | 1-14 | INV. G06N3/048 G06N3/063 ADD. G06N3/084 G06N3/0464 G06N3/09 G06N3/0495 G06N3/0455 |
| A | KOCA NAZIM ALTAR ET AL: "Hardware-efficient Softmax Approximation for Self-Attention Networks", 2023 IEEE INTERNATIONAL SYMPOSIUM ON CIRCUITS AND SYSTEMS (ISCAS), IEEE, 21 May 2023 (2023-05-21), pages 1-5, XP034381276, DOI: 10.1109/ISCAS46773.2023.10181465 [retrieved on 2023-07-21] * the whole document * ----- | 1-14 | |

**TECHNICAL FIELDS SEARCHED (IPC)**

G06N

The present search report has been drawn up for all claims

| Place of search | Date of completion of the search | Examiner |
|---|---|---|
| The Hague | 20 October 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)